(19) Europäisches Patentamt
European Patent Office
Office européen des brevets

(11) EP 4 365 997 A1

(12) EUROPEAN PATENT APPLICATION
published in accordance with Art. 153(4) EPC

(43) Date of publication:
**08.05.2024 Bulletin 2024/19**

(21) Application number: **22833201.1**

(22) Date of filing: **29.06.2022**

(51) International Patent Classification (IPC):
***H01M 4/62*** *(2006.01)* ***H01G 11/06*** *(2013.01)*
***H01G 11/38*** *(2013.01)* ***H01M 4/131*** *(2010.01)*
***H01M 4/1391*** *(2010.01)*

(52) Cooperative Patent Classification (CPC):
**H01G 11/06; H01G 11/38; H01M 4/131; H01M 4/1391; H01M 4/62;** Y02E 60/10

(86) International application number:
**PCT/JP2022/025926**

(87) International publication number:
**WO 2023/277055 (05.01.2023 Gazette 2023/01)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **29.06.2021 JP 2021107335**

(71) Applicant: **Daikin Industries, Ltd.**
**Osaka-Shi, Osaka 530-0001 (JP)**

(72) Inventors:
- **NISHIYAMA, Yumi**
**Osaka-Shi, Osaka 530-0001 (JP)**
- **HOSODA, Chihiro**
**Osaka-Shi, Osaka 530-0001 (JP)**
- **YAMAZAKI, Shigeaki**
**Osaka-Shi, Osaka 530-0001 (JP)**
- **TERADA, Junpei**
**Osaka-Shi, Osaka 530-0001 (JP)**

(74) Representative: **Hoffmann Eitle**
**Patent- und Rechtsanwälte PartmbB**
**Arabellastraße 30**
**81925 München (DE)**

# (54) COMPOSITION FOR FORMING ELECTRODE, ELECTRODE AND SECONDARY BATTERY

(57) Provided is a composition for electrode formation comprising a copolymer comprising vinylidene fluoride unit and a unit of an other monomer other than vinylidene fluoride, and a solvent represented by a general formula (1): $NR^1R^2R^3$ wherein $R^1$, $R^2$, and $R^3$ are each independently H or a monovalent substituent, provided that the total number of carbon atoms of $R^1$, $R^2$, and $R^3$ is 6 or more, and at least one of $R^1$, $R^2$, and $R^3$ is an organic group having carbonyl group; and any two of $R^1$, $R^2$, and $R^3$ optionally bond to each other to form a ring.

EP 4 365 997 A1

**Description**

TECHNICAL FIELD

The present disclosure relates to a composition for electrode formation, an electrode, and a secondary battery.

BACKGROUND ART

An electrode included in an electrochemical device such as a lithium ion battery can be formed, for example, by dissolving an electrode material and a binder in a solvent and applying the resulting composition to a current collector.
For example, Patent Document 1 discloses an electrode forming composition including: a linear semi-crystalline copolymer [polymer (A)] including repeating units derived from a vinylidene fluoride (VDF) monomer and a hydrophilic (meth)acrylic monomer (MA) represented by a specific chemical formula wherein the copolymer [polymer (A)] includes 0.05 to 10 mol% of the repeating unit derived from the hydrophilic (meth)acrylic monomer (MA) and is characterized by a fraction of a randomly distributed unit (MA) of at least 40%; a powdered electrode material; and optionally a conductivity-imparting additive and/or a viscosity modifying agent.
Patent Document 2 discloses a polymer dope characterized by including a fluororesin and/or an aromatic polyamide resin and a β-alkoxypropionamide-based solvent represented by a specific chemical formula.
Patent Document 3 discloses that positive electrodes for electrochemical cycling experiments were prepared by coating aluminum foil with a slurry containing 92.5% by mass of a cathode active material, 2% by mass of graphite, 2% by mass of Super C65 carbon black, and 3.5% by mass of a polyvinylidene fluoride (PVdF) binder suspended in N-ethyl-2-pyrrolidinone (NEP).

RELATED ART

PATENT DOCUMENTS

Patent Document 1: Japanese Translation of PCT International Application Publication No. 2010-525124
Patent Document 2: Japanese Patent Laid-Open No. 2011-184479
Patent Document 3: Japanese Translation of PCT International Application Publication No. 2021-508145

SUMMARY OF THE INVENTION

PROBLEM TO BE SOLVED BY THE INVENTION

An object of the present disclosure is to provide a composition for electrode formation containing a solvent different from a conventional organic solvent, wherein the composition for electrode formation can be prepared very easily, has excellent slurry stability, can form a coating layer that is firmly adhered to a metal foil and has excellent flexibility and conductivity, and can realize a battery that has a high temperature storage capacity retention rate, has a small gas generation volume, and is unlikely to increase in resistance by using a metal foil including such a coating layer as a battery electrode.

MEANS FOR SOLVING THE PROBLEM

According to the present disclosure, provided is a composition for electrode formation containing a copolymer containing vinylidene fluoride unit and a unit of an other monomer other than vinylidene fluoride, and a solvent represented by a general formula (1).
General formula (1):

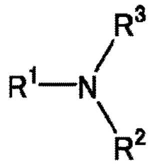

wherein $R^1$, $R^2$, and $R^3$ are each independently H or a monovalent substituent, provided that the total number of carbon atoms of $R^1$, $R^2$, and $R^3$ is 6 or more, and at least one of $R^1$, $R^2$, and $R^3$ is an organic group having carbonyl group; and any two of $R^1$, $R^2$, and $R^3$ optionally bond to each other to form a ring.

In the composition for electrode formation of the present disclosure, the solvent is preferably a solvent represented by a general formula (1a).

General formula (1a):

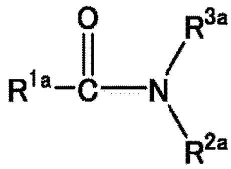

wherein $R^{1a}$ is a monovalent substituent, $R^{2a}$ and $R^{3a}$ are each independently H or a monovalent substituent, provided that the total number of carbon atoms of $R^{1a}$, $R^{2a}$, and $R^{3a}$ is 5 or more; and any two of $R^{1a}$, $R^{2a}$, and $R^{3a}$ optionally bond to each other to form a ring.

In the composition for electrode formation of the present disclosure, the solvent is preferably at least one selected from the group consisting of a solvent represented by a general formula (1b-1) and a solvent represented by a general formula (1b-2).

General formula (1b-1):

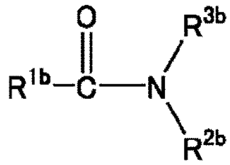

wherein $R^{1b}$ is an alkyl group, an alkoxyalkyl group, an acylalkyl group, an alkenyl group, an amino group, or an aminoalkyl group, $R^{2b}$ and $R^{3b}$ are each independently an alkyl group or an alkoxyalkyl group, and the total number of carbon atoms of $R^{1b}$, $R^{2b}$, and $R^{3b}$ is 5 or more; and $R^{2b}$ and $R^{3b}$ optionally bond with each other to form a ring together with the nitrogen atom to which $R^{2b}$ and $R^{3b}$ are attached, and the ring optionally contains an oxygen atom as a ring-constituting atom.

General formula (1b-2):

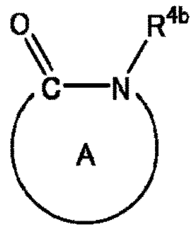

wherein ring A is a 5- or 6-membered amide ring, $R^{4b}$ is an alkyl group, a cycloalkyl group, or an alkenyl group, and the total number of carbon atoms of ring A and $R^{4b}$ is 5 or more.

In the composition for electrode formation of the present disclosure, the solvent is preferably at least one selected from the group consisting of 3-methoxy-N,N-dimethylpropanamide, N-ethyl-2-pyrrolidone, and N-butyl-2-pyrrolidone.

In the composition for electrode formation of the present disclosure, the other monomer is preferably at least one selected from the group consisting of tetrafluoroethylene, chlorotrifluoroethylene, (meth)acrylic acid, 2,3,3,3-tetrafluoropropene, hexafluoropropylene, and a fluoroalkyl vinyl ether.

In the composition for electrode formation of the present disclosure, the content of the other monomer unit in the copolymer is preferably 0.0001 to 50.0 mol% based on all monomer units.

The composition for electrode formation of the present disclosure preferably further contains a powder electrode material.

In the composition for electrode formation of the present disclosure, the powder electrode material preferably contains a lithium transition metal composite oxide.

The composition for electrode formation of the present disclosure is preferably a composition for positive electrode formation.

In addition, according to the present disclosure, provided is an electrode including a current collector and an electrode material layer provided on one side or each of both sides of the current collector and formed from the above composition for electrode formation.

In addition, according to the present disclosure, a secondary battery including the above electrode is provided.

## EFFECTS OF INVENTION

According to the present disclosure, it is possible to provide a composition for electrode formation containing a solvent different from a conventional organic solvent, wherein the composition for electrode formation can be prepared very easily, has excellent slurry stability, can form a coating layer that is firmly adhered to a metal foil and has excellent flexibility and conductivity, and can realize a battery that has a high temperature storage capacity retention rate, has a small gas generation volume, and is unlikely to increase in resistance by using a metal foil including such a coating layer as a battery electrode.

## DESCRIPTION OF EMBODIMENTS

Hereinafter, specific embodiments of the present disclosure will be described in detail, but the present disclosure is not limited to the following embodiments.

The composition for electrode formation of the present disclosure contains a copolymer containing vinylidene fluoride (VdF) unit and a unit of an other monomer other than VdF, and a solvent having a specific chemical structure.

Patent Document 1 discloses an electrode forming composition including a linear semi-crystalline copolymer including repeating units derived from a vinylidene fluoride monomer and a hydrophilic (meth)acrylic monomer represented by a specific chemical formula. In this composition for electrode formation, it is preferable to use a nitrogen-containing organic solvent having a higher dissolving power such as N-methyl-2-pyrrolidone (NMP), N,N-dimethylformamide (DMF), or N,N-dimethylacetamide (DMAc) as an organic solvent.

In addition, as an organic solvent for the composition for electrode formation, Patent Document 2 discloses the use of a β-alkoxypropionamide-based solvent, and Patent Document 3 discloses the use of N-ethyl-2-pyrrolidinone. However, in the combination of the fluororesin and the organic solvent disclosed in each of Patent Documents 2 and 3, the fluororesin is difficult to dissolve or disperse in the organic solvent, and the composition for electrode formation obtained has insufficient slurry stability.

In the present disclosure, a copolymer containing VdF unit and a unit of an other monomer other than VdF is

used as a binder for the composition for electrode formation, and a solvent represented by a general formula (1) is used as a solvent for the composition for electrode formation.

General formula (1):

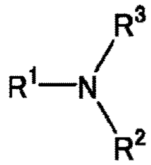

wherein $R^1$, $R^2$, and $R^3$ are each independently H or a monovalent substituent, provided that the total number of carbon atoms of $R^1$, $R^2$, and $R^3$ is 6 or more, and at least one of $R^1$, $R^2$, and $R^3$ is an organic group having carbonyl group; and any two of $R^1$, $R^2$, and $R^3$ optionally bond to each other to form a ring.

It was found that the solvent represented by the general formula (1), like a conventional organic solvent such as NMP, dissolves the copolymer containing VdF and an other monomer unit easily at normal temperature. Therefore, the composition for electrode formation of the present disclosure can be prepared very easily. In addition, the composition for electrode formation of the present disclosure also has excellent slurry stability (the property of being unlikely to increase in viscosity even after mixing with a powder electrode material) and can be easily applied to a metal foil such as aluminum foil. Further, the resulting coating layer is firmly adhered to the metal foil, and also has excellent flexibility and conductivity. By using a metal foil including such a coating layer as a battery electrode, it is possible to realize a battery that has a high temperature storage capacity retention rate, has a small gas generation volume, and is unlikely to increase in resistance.

<Copolymer>

The copolymer contained in the composition for electrode formation of the present disclosure contains a VdF unit and a unit of an other monomer other than VdF. The other monomer may be a fluorinated monomer in some embodiments, and may be a non-fluorinated monomer in other embodiments. The copolymer contained in the composition for electrode formation of the present disclosure contains a unit of an other monomer other than VdF in addition to VdF unit and thus is more easily dissolved in the solvent represented by the general formula (1) than a VdF homopolymer that has been conventionally used as a binder.

Examples of the fluorinated monomer excluding VdF include tetrafluoroethylene (TFE), vinyl fluoride, trifluoroethylene, chlorotrifluoroethylene (CTFE), fluoroalkyl vinyl ether, hexafluoropropylene (HFP), (perfluoroalkyl)ethylene, 2,3,3,3-tetrafluoropropene, and trans-1,3,3,3-tetrafluoropropene.

The fluoroalkyl vinyl ether is preferably fluoroalkyl vinyl ether having a fluoroalkyl group having 1 to 5 carbon atoms, and more preferably at least one selected from the group consisting of perfluoro(methyl vinyl ether) (PMVE), perfluoro(ethyl vinyl ether), and perfluoro(propyl vinyl ether).

The fluorinated monomer is, among those, preferably at least one selected from the group consisting of TFE, CTFE, 2,3,3,3-tetrafluoropropene, HFP, and fluoroalkyl vinyl ether, more preferably at least one selected from the group consisting of TFE and HFP, and particularly preferably TFE, from the viewpoint of being able to form an electrode material layer having far superior flexibility and adhesion to a current collector and being able to form a secondary battery having far superior battery characteristics.

The fluorinated monomer excluding VdF may or may not have a polar group.

Examples of the non-fluorinated monomer include a non-fluorinated monomer having no polar group such as ethylene or propylene, and a non-fluorinated monomer having a polar group (hereinafter, sometimes referred to as a polar group-containing monomer).

When a non-fluorinated monomer having a polar group is used, the polar group is introduced into the copolymer, and this allows further superior adhesion between the coating layer and the metal foil to be obtained. The polar group is preferably at least one selected from the group consisting of a carbonyl group-containing group, an epoxy group, a hydroxy group, a sulfonic acid group, a sulfuric acid group, a phosphoric acid group, an amino group, an amide group, and an alkoxy group, more preferably at least one selected from the group consisting of a carbonyl group-containing group, an epoxy group, and a hydroxy group, and further preferably a carbonyl group-containing group. The hydroxy group does not include a hydroxy group constituting a part of the carbonyl group-containing group. In addition, the amino group is a monovalent functional group obtained by removing hydrogen from ammonia or a primary or secondary amine.

The carbonyl group-containing group is a functional group having a carbonyl group (-C(=O)-). The carbonyl

group-containing group is preferably a group represented by the general formula: -COOR wherein R represents a hydrogen atom, an alkyl group, or a hydroxyalkyl group, or a carboxylic anhydride group, and more preferably a group represented by the general formula: -COOR. The number of carbon atoms of each of the alkyl group and the hydroxyalkyl group is preferably 1 to 16, more preferably 1 to 6, and further preferably 1 to 3. Specific examples of the group represented by the general formula: -COOR include $-COOCH_2CH_2OH$, $-COOCH_2CH(CH_3)$ OH, -COOCH $(CH_3)$ $CH_2OH$, -COOH, -$COOCH_3$, and $-COOC_2H_5$. When the group represented by the general formula: -COOR is -COOH or includes -COOH, in some embodiments, -COOH is a carboxylate such as a metal carboxylate or ammonium carboxylate.

In addition, in some embodiments, the carbonyl group-containing group may be a group represented by the general formula: -X-COOR wherein X is an atomic group having a main chain composed of 1 to 20 atoms and having a molecular weight of 500 or less and R represents a hydrogen atom, an alkyl group, or a hydroxyalkyl group. The number of carbon atoms of each of the alkyl group and the hydroxyalkyl group is preferably 1 to 16, more preferably 1 to 6, and further preferably 1 to 3.

The amide group is preferably a group represented by the general formula: -CO-NRR' wherein R and R' each independently represent a hydrogen atom or a substituted or unsubstituted alkyl group, or a bond represented by the general formula: -CO-NR"- wherein R" represents a hydrogen atom, a substituted or unsubstituted alkyl group, or a substituted or unsubstituted phenyl group.

Examples of the above polar group-containing monomer include a hydroxyalkyl (meth)acrylate such as hydroxyethyl acrylate or 2-hydroxypropyl acrylate; an alkylidenemalonate ester such as dimethyl methylidenemalonate; a vinyl carboxyalkyl ether such as vinyl carboxymethyl ether or vinyl carboxyethyl ether; a carboxyalkyl (meth)acrylate such as 2-carboxyethyl acrylate or 2-carboxyethyl methacrylate; a (meth)acryloyloxyalkyl dicarboxylate ester such as acryloyloxyethyl succinate, acryloyloxypropyl succinate, methacryloyloxyethyl succinate, acryloyloxyethyl phthalate, or methacryloyloxyethyl phthalate; a monoester of an unsaturated dibasic acid such as monomethyl maleate, monoethyl maleate, monomethyl citraconate, or monoethyl citraconate; a monomer (4) represented by a general formula (4):

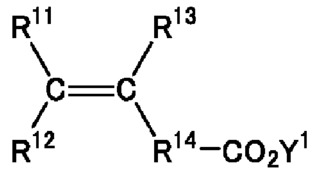

wherein $R^{11}$ to $R^{13}$ each independently represent a hydrogen atom or a hydrocarbon group having 1 to 8 carbon atoms, $R^{14}$ represents a single bond or a hydrocarbon group having 1 to 8 carbon atoms, and $Y^1$ represents an inorganic cation and/or an organic cation; and an unsaturated dibasic acid such as maleic acid, maleic anhydride, citraconic acid, or citraconic anhydride.

The polar group-containing monomer unit that the copolymer can contain is preferably a unit based on the monomer (4) represented by the general formula (4).

In the general formula (4), $Y^1$ represents an inorganic cation and/or an organic cation. Examples of the inorganic cation include a cation such as H, Li, Na, K, Mg, Ca, Al, or Fe. Examples of the organic cation include a cation such as $NH_4$, $NH_3R^{15}$, $NH_2R^{15}{}_2$, $NHR^{15}{}_3$, or $NR^{15}{}_4$ wherein $R^{15}$ independently represents an alkyl group having 1 to 4 carbon atoms. $Y^1$ is preferably H, Li, Na, K, Mg, Ca, Al, or $NH_4$, more preferably H, Li, Na, K, Mg, Al, or $NH_4$, further preferably H, Li, Al, or $NH_4$, and particularly preferably H. Specific examples of the inorganic cation and the organic cation are described by omitting their signs and valences for convenience.

In the general formula (4), $R^{11}$ to $R^{13}$ each independently represent a hydrogen atom or a hydrocarbon group having 1 to 8 carbon atoms. The hydrocarbon group is a monovalent hydrocarbon group. The hydrocarbon group preferably has 4 or less carbon atoms. Examples of the hydrocarbon group include an alkyl group, an alkenyl group, and an alkynyl group having the above number of carbon atoms, and a methyl group or an ethyl group is preferable. $R^{11}$ and $R^{12}$ are preferably each independently a hydrogen atom, a methyl group, or an ethyl group, and $R^{13}$ is preferably a hydrogen atom or a methyl group.

In the general formula (4), $R^{14}$ represents a single bond or a hydrocarbon group having 1 to 8 carbon atoms. The hydrocarbon group is a divalent hydrocarbon group. The hydrocarbon group preferably has 4 or less carbon atoms. Examples of the hydrocarbon group include an alkylene group and an alkenylene group having the above number of carbon atoms, and among these, at least one selected from the group consisting of a methylene group, an ethylene group, an ethylidene group, a propylidene group, and an isopropylidene group is preferable, and a methylene group is more preferable.

The monomer (4) is preferably at least one selected from the group consisting of (meth)acrylic acid and a salt thereof, vinylacetic acid (3-butenoic acid) and a salt thereof, 3-pentenoic acid and a salt thereof, 4-pentenoic acid and a salt thereof, 3-hexenoic acid and a salt thereof, 4-heptenoic acid and a salt thereof, and 5-hexenoic acid and a salt

thereof.

The other monomer is preferably at least one selected from the group consisting of TFE, CTFE, (meth)acrylic acid, 2,3,3,3-tetrafluoropropene, HFP, and fluoroalkyl vinyl ether. (Meth)acrylic acid includes acrylic acid and methacrylic acid.

The content of the other monomer unit of the copolymer is preferably 0.0001 to 50.0 mol%, more preferably 0.01 mol% or more, further preferably 0.10 mol% or more, and more preferably 45.0 mol% or less, further preferably 40.0 mol% or less, particularly preferably 35.0 mol% or less, based on all monomer units.

The content of the VdF unit of the copolymer is 50.0 to 99.9999 mol%, more preferably 55.0 mol% or more, further preferably 60.0 mol% or more, particularly preferably 65.0 mol% or more, and more preferably 99.99 mol% or less, further preferably 99.90 mol% or less, based on all monomer units.

When the copolymer contains a fluorinated monomer unit as the other monomer unit, the content of the fluorinated monomer unit is preferably 0.0001 to 50.0 mol%, more preferably 2.0 mol% or more, further preferably 3.0 mol% or more, particularly preferably 4.0 mol% or more, and more preferably 45.0 mol% or less, further preferably 40.0 mol% or less, particularly preferably 35.0 mol% or less, based on all monomer units.

When the copolymer contains a fluorinated monomer unit as the other monomer unit, the content of the VdF unit of the copolymer is 50.0 to 99.999 mol%, more preferably 55.0 mol% or more, further preferably 60.0 mol% or more, particularly preferably 65.0 mol% or more, and more preferably 98.0 mol% or less, further preferably 97.0 mol% or less, particularly preferably 96.0 mol% or less, based on all monomer units.

When the copolymer contains a non-fluorinated monomer unit such as a polar group-containing monomer as the other monomer unit, the content of the non-fluorinated monomer unit is preferably 0.0001 to 50.0 mol%, more preferably 0.01 mol% or more, further preferably 0.10 mol% or more, and more preferably 5.0 mol% or less, further preferably 3.0 mol% or less, particularly preferably 1.5 mol% or less, based on all monomer units.

When the copolymer contains a non-fluorinated monomer unit as the other monomer unit, the content of the VdF unit of the copolymer is preferably 50.0 to 99.999 mol%, more preferably 95.0 mol% or more, further preferably 97.0 mol% or more, particularly preferably 98.5 mol% or more, and more preferably 99.99 mol% or less, further preferably 99.90 mol% or less, based on all monomer units.

In the present disclosure, the formulation of the copolymer can be measured, for example, by $^{19}$F-NMR measurement. In addition, when the copolymer contains a polar group-containing monomer unit as the other monomer unit, the content of the polar group-containing monomer unit, for example where the polar group is an acid group such as a carboxylic acid, can be measured by acid-base titration of the acid group.

The weight average molecular weight, in terms of polystyrene, of the copolymer is preferably 10,000 to 3,000,000, more preferably 30,000 or more, further preferably 50,000 or more, particularly preferably 200,000 or more, and more preferably 2,400,000 or less, further preferably 2,200,000 or less, particularly preferably 2,000,000 or less. The weight average molecular weight can be measured by gel permeation chromatography (GPC) using dimethylformamide as a solvent.

The number average molecular weight, in terms of polystyrene, of the copolymer is preferably 7,000 to 1,500,000, more preferably 21,000 or more, further preferably 35,000 or more, and more preferably 1,400,000 or less, further preferably 1,200,000 or less, particularly preferably 1,100,000 or less. The number average molecular weight can be measured by gel permeation chromatography (GPC) using dimethylformamide as a solvent.

Examples of the copolymer include a VdF/(meth)acrylic acid copolymer, a VdF/TFE copolymer, a VdF/HFP copolymer, a VdF/fluoroalkyl vinyl ether copolymer, a VdF/TFE/HFP copolymer, a VdF/2,3,3,3-tetrafluoropropene copolymer, a VdF/TFE/2,3,3,3-tetrafluoropropene copolymer, a VdF/TFE/(meth)acrylic acid copolymer, a VdF/HFP/(meth)acrylic acid copolymer, a VdF/CTFE copolymer, a VdF/TFE/4-pentenoic acid copolymer, a VdF/TFE/3-butenoic acid copolymer, a VdF/TFE/HFP/(meth)acrylic acid copolymer, a VdF/TFE/HFP/4-pentenoic acid copolymer, a VdF/TFE/HFP/3-butenoic acid copolymer, a VdF/TFE/2-carboxyethyl acrylate copolymer, a VdF/TFE/HFP/2-carboxyethyl acrylate copolymer, a VdF/TFE/acryloyloxyethyl succinate copolymer, and a VdF/TFE/HFP/acryloyloxyethyl succinate copolymer.

The copolymer is, among these, preferably at least one selected from the group consisting of a VdF/TFE copolymer, a VdF/CTFE copolymer, a VdF/(meth)acrylic acid copolymer, a VdF/2,3,3,3-tetrafluoropropene copolymer, a VdF/HFP copolymer, and a VdF/fluoroalkyl vinyl ether copolymer.

The VdF/TFE copolymer contains a VdF unit and a TFE unit. By using the VdF/TFE copolymer as the copolymer, a composition for electrode formation can be formed very easily, and a composition for electrode formation having quite excellent slurry stability can be obtained, and a coating layer having quite excellent flexibility can be formed. The content of the VdF unit is preferably 50.0 to 95.0 mol%, more preferably 55.0 mol% or more, further preferably 60.0 mol% or more, and more preferably 92.0 mol% or less, further preferably 89.0 mol% or less, based on all monomer units of the VdF/TFE copolymer. The content of the TFE unit is preferably 50.0 to 5.0 mol%, more preferably 45.0 mol% or less, further preferably 40.0 mol% or less, and more preferably 8.0 mol% or more, further preferably 11.0 mol% or more, based on all monomer units of the VdF/TFE copolymer.

In some embodiments, the VdF/TFE copolymer may include a unit based on a monomer copolymerizable with VdF and TFE provided that the monomer excludes VdF and TFE, in addition to a VdF unit and a TFE unit. The content of the unit based on a monomer copolymerizable with VdF and TFE is preferably 3.0 mol% or less based on all monomer units of the VdF/TFE copolymer from the viewpoint of the electrolytic solution swelling resistance.

Examples of the monomer copolymerizable with VdF and TFE include the above fluorinated monomer and the above non-fluorinated monomer. The monomer copolymerizable with VdF and TFE is, among these, preferably at least one selected from the group consisting of a fluorinated monomer and a polar group-containing monomer, and more preferably at least one selected from the group consisting of HFP, 2,3,3,3-tetrafluoropropene, and the monomer (4).

The weight average molecular weight, in terms of polystyrene, of the VdF/TFE copolymer is preferably 50,000 to 2,000,000, more preferably 80,000 to 1,700,000, and further preferably 100,000 to 1,500,000.

The number average molecular weight, in terms of polystyrene, of the VdF/TFE copolymer is 35,000 to 1,400,000, more preferably 40,000 to 1,300,000, and further preferably 50,000 to 1,200,000.

The VdF/CTFE copolymer contains a VdF unit and a CTFE unit. By using the VdF/CTFE copolymer as the copolymer, a composition for electrode formation can be formed very easily, and a coating layer that is extremely firmly adhered to a metal foil can be formed. The content of the VdF unit is preferably 80.0 to 98.0 mol%, more preferably 85.0 mol% or more, further preferably 90.0 mol% or more, and more preferably 97.5 mol% or less, further preferably 97.0 mol% or less, based on all monomer units of the VdF/CTFE copolymer. The content of the CTFE unit is preferably 20.0 to 2.0 mol%, more preferably 15.0 mol% or less, further preferably 10.0 mol% or less, and more preferably 2.5 mol% or more, further preferably 3.0 mol% or more, based on all monomer units of the VdF/CTFE copolymer.

In some embodiments, the VdF/CTFE copolymer may include a unit based on a monomer copolymerizable with VdF and CTFE provided that the monomer excludes VdF and CTFE, in addition to a VdF unit and a CTFE unit. The content of the unit based on a monomer copolymerizable with VdF and CTFE is preferably 3.0 mol% or less based on all monomer units of the VdF/CTFE copolymer from the viewpoint of the electrolytic solution swelling resistance.

Examples of the monomer copolymerizable with VdF and CTFE include the above fluorinated monomer and the above non-fluorinated monomer. The monomer copolymerizable with VdF and TFE is, among these, preferably at least one selected from the group consisting of a fluorinated monomer and a polar group-containing monomer, more preferably at least one selected from the group consisting of TFE, HFP, 2,3,3,3-tetrafluoropropene, and the monomer (4), and further preferably TFE.

The weight average molecular weight, in terms of polystyrene, of the VdF/CTFE copolymer is preferably 50,000 to 2,000,000, more preferably 80,000 to 1,700,000, and further preferably 100,000 to 1,500,000.

The number average molecular weight, in terms of polystyrene, of the VdF/CTFE copolymer is preferably 35,000 to 1,400,000, more preferably 40,000 to 1,300,000, and further preferably 50,000 to 1,200,000.

The VdF/(meth)acrylic acid copolymer contains a VdF unit and a (meth)acrylic acid unit. By using the VdF/(meth)acrylic acid copolymer as the copolymer, a composition for electrode formation can be formed very easily, and a coating layer that is extremely firmly adhered to a metal foil can be formed. The content of the (meth)acrylic acid unit is preferably 0.0001 to 5.0 mol%, more preferably 0.01 to 3.0 mol%, and further preferably 0.10 to 1.5 mol%, based on all monomer units.

The content of the VdF unit of the VdF/(meth)acrylic acid copolymer is preferably 95.0 to 99.9999 mol%, more preferably 97.0 to 99.99 mol%, and further preferably 98.5 to 99.90 mol%, based on all monomer units.

The weight average molecular weight, in terms of polystyrene, of the VdF/(meth) acrylic acid copolymer is preferably 50,000 to 3,000,000, more preferably 80,000 or more, further preferably 100,000 or more, particularly preferably 200,000 or more, and more preferably 2,400,000 or less, further preferably 2,200,000 or less, particularly preferably 2,000,000 or less.

The number average molecular weight, in terms of polystyrene, of the VdF/(meth) acrylic acid copolymer is preferably 20,000 to 1,500,000, more preferably 40,000 or more, further preferably 70,000 or more, particularly preferably 140,000 or more, and more preferably 1,400,000 or less, further preferably 1,200,000 or less, particularly preferably 1,100,000 or less.

The VdF/2,3,3,3-tetrafluoropropene copolymer contains a VdF unit and a 2,3,3,3-tetrafluoropropene unit. By using the VdF/2,3,3,3-tetrafluoropropene copolymer as the copolymer, a composition for electrode formation can be very easily formed, and a coating layer that has quite excellent flexibility and conductivity can be formed. The content of the VdF unit is preferably 50.0 to 98.0 mol%, more preferably 55.0 mol% or more, further preferably 60.0 mol% or more, particularly preferably 65.0 mol% or more, and more preferably 97.0 mol% or less, further preferably 96.0 mol% or less, based on all monomer units of the VdF/2,3,3,3-tetrafluoropropene copolymer. The content of the 2,3,3,3-tetrafluoropropene unit is preferably 2.0 to 50.0 mol%, more preferably 3.0 mol% or more, further preferably 4.0 mol% or more, and more preferably 45.0 mol% or less, further preferably 40.0 mol% or less, particularly preferably 35.0 mol% or less, based on all monomer units of the VdF/TFE copolymer.

In some embodiments, the VdF/2,3,3,3-tetrafluoropropene copolymer may include a unit based on a monomer copolymerizable with VdF and 2,3,3,3-tetrafluoropropene provided that the monomer excludes VdF and 2,3,3,3-tetrafluoropropene, in addition to a VdF unit and a 2,3,3,3-tetrafluoropropene unit. The content of the unit based on a monomer copolymerizable with VdF and 2,3,3,3-tetrafluoropropene is preferably 3.0 mol% or less based on all monomer units of the VdF/2,3,3,3-tetrafluoropropene copolymer from the viewpoint of the electrolytic solution swelling resistance.

Examples of the monomer copolymerizable with VdF and 2,3,3,3-tetrafluoropropene include the above fluorinated monomer and the above non-fluorinated monomer. The monomer copolymerizable with VdF and 2,3,3,3-tetrafluoropropene is, among these, preferably at least one selected from the group consisting of a fluorinated monomer and a polar group-containing monomer, and more preferably at least one selected from the group consisting of TFE, HFP, and the monomer (4).

The weight average molecular weight, in terms of polystyrene, of the VdF/2,3,3,3-tetrafluoropropene copolymer is preferably 10,000 to 2,000,000, more preferably 30,000 to 1,700,000, and further preferably 5,000 to 1,500,000.

The number average molecular weight, in terms of polystyrene, of the VdF/2,3,3,3-tetrafluoropropene copolymer is preferably 7,000 to 1,400,000, more preferably 21,000 to 1,300,000, and further preferably 35,000 to 1,200,000.

The VdF/HFP copolymer contains a VdF unit and an HFP unit. By using the VdF/HFP copolymer as the copolymer, a composition for electrode formation can be formed very easily, and a coating layer that is extremely firmly adhered to a metal foil can be formed. The content of the VdF unit is preferably 80.0 to 98.0 mol%, more preferably 83.0 mol% or more, further preferably 85.0 mol% or more, and more preferably 97.0 mol% or less, further preferably 96.0 mol% or less, based on all monomer units of the VdF/HFP copolymer. The content of the HFP unit is preferably 20.0 to 2.0 mol%, more preferably 17.0 mol% or less, further preferably 15.0 mol% or less, and more preferably 3.0 mol% or more, further preferably 4.0 mol% or more, based on all monomer units of the VdF/HFP copolymer.

In some embodiments, the VdF/HFP copolymer may include a unit based on a monomer copolymerizable with VdF and HFP provided that the monomer excludes VdF and HFP in addition to a VdF unit and an HFP unit. The content of the unit based on a monomer copolymerizable with VdF and HFP is preferably 3.0 mol% or less based on all monomer units of the VdF/HFP copolymer from the viewpoint of the electrolytic solution swelling resistance.

Examples of the monomer copolymerizable with VdF and HFP include the above fluorinated monomer and the above non-fluorinated monomer. The monomer copolymerizable with VdF and HFP is, among these, preferably at least one selected from the group consisting of a fluorinated monomer and a polar group-containing monomer, more preferably at least one selected from the group consisting of TFE, 2,3,3,3-tetrafluoropropene, and the monomer (4), and further preferably the monomer (4).

The weight average molecular weight, in terms of polystyrene, of the VdF/HFP copolymer is preferably 50,000 to 2,000,000, more preferably 80,000 to 1,700,000, and further preferably 100,000 to 1,500,000.

The number average molecular weight, in terms of polystyrene, of the VdF/HFP copolymer is preferably 35,000 to 1,400,000, more preferably 40,000 to 1,300,000, and further preferably 50,000 to 1,200,000.

The VdF/fluoroalkyl vinyl ether copolymer contains a VdF unit and a fluoroalkyl vinyl ether unit. The content of the VdF unit is preferably 80.0 to 98.0 mol%, more preferably 83.0 mol% or more, further preferably 85.0 mol% or more, and more preferably 97.0 mol% or less, further preferably 96.0 mol% or less, based on all monomer units of the VdF/fluoroalkyl vinyl ether copolymer. The content of the fluoroalkyl vinyl ether unit is preferably 20.0 to 2.0 mol%, more preferably 17.0 mol% or less, further preferably 15.0 mol% or less, and more preferably 3.0 mol% or more, further preferably 4.0 mol% or more, based on all monomer units of the VdF/fluoroalkyl vinyl ether copolymer.

In some embodiments, the VdF/fluoroalkyl vinyl ether copolymer may include a unit based on a monomer copolymerizable with VdF and fluoroalkyl vinyl ether provided that the monomer excludes VdF and fluoroalkyl vinyl ether, in addition to a VdF unit and a fluoroalkyl vinyl ether unit. The content of the unit based on a monomer copolymerizable with VdF and fluoroalkyl vinyl ether is preferably 3.0 mol% or less based on all monomer units of the VdF/fluoroalkyl vinyl ether copolymer from the viewpoint of the electrolytic solution swelling resistance.

Examples of the monomer copolymerizable with VdF and fluoroalkyl vinyl ether include the above fluorinated monomer and the above non-fluorinated monomer. The monomer copolymerizable with VdF and fluoroalkyl vinyl ether is, among these, preferably at least one selected from the group consisting of a fluorinated monomer and a polar group-containing monomer, more preferably at least one selected from the group consisting of TFE, 2,3,3,3-tetrafluoropropene, and the monomer (4), and further preferably the monomer (4).

The weight average molecular weight, in terms of polystyrene, of the VdF/fluoroalkyl vinyl ether copolymer is preferably 50,000 to 2,000,000, more preferably 80,000 to 1,700,000, and further preferably 100,000 to 1,500,000.

The number average molecular weight, in terms of polystyrene, of the VdF/fluoroalkyl vinyl ether copolymer is preferably 35,000 to 1,400,000, more preferably 40,000 to 1,300,000, and further preferably 50,000 to 1,200,000.

The content of the copolymer in the composition for electrode formation is preferably 0.1 to 20% by mass, more preferably 0.2 to 10% by mass, and further preferably 0.5 to 3% by mass, based on the mass of the composition for electrode formation.

<Solvent>

The solvent contained in the composition for electrode formation of the present disclosure is represented by a general formula (1). The solvent used in the present disclosure is suitably a solvent that is liquid at 20°C.

General formula (1):

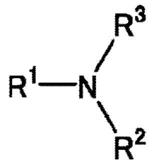

wherein $R^1$, $R^2$, and $R^3$ are each independently H or a monovalent substituent,
provided that the total number of carbon atoms of $R^1$, $R^2$, and $R^3$ is 6 or more, and at least one of $R^1$, $R^2$, and $R^3$ is an organic group having carbonyl group; and any two of $R^1$, $R^2$, and $R^3$ optionally bond to each other to form a ring.

The total number of carbon atoms of $R^1$, $R^2$, and $R^3$ is 6 or more. That is, the types of the groups of $R^1$, $R^2$, and $R^3$ are each selected such that the total number of carbon atoms is 6 or more. The upper limit of the total number of carbon atoms of $R^1$, $R^2$, and $R^3$ is not limited, and, in some embodiments, may be 16 or less, 14 or less, or 12 or less.

$R^1$, $R^2$, and $R^3$ are each independently H or a monovalent substituent. The monovalent substituent is preferably an alkyl group, an alkoxyalkyl group, an acylalkyl group, an alkenyl group, an amino group, an aminoalkyl group, or a cycloalkyl group.

At least one of $R^1$, $R^2$, and $R^3$ is an organic group having carbonyl group. The organic group having carbonyl group is preferably an acyl group. The acyl group is preferably a group represented by the general formula: $-CO-R^4$ wherein $R^4$ is an alkyl group having 1 to 6 carbon atoms. When the number of carbon atoms of the alkyl group is 3 or more, the alkyl group may be linear in some embodiments, and may be branched in other embodiments. When the number of carbon atoms of the alkyl group of $R^4$ is 2 or more, $R^4$ may include a heteroatom such as oxygen atom or nitrogen atom or carbonyl group between carbon atoms thereof.

Any two of $R^1$, $R^2$, and $R^3$ optionally bond to each other to form a ring. In addition, the ring optionally contains a heteroatom such as an oxygen atom as a ring-constituting atom. The ring is preferably a saturated ring. The number of members of the ring is not limited, and the ring is preferably 5- or 6-membered. The ring is preferably a pyrrolidine ring, an oxazoline ring, a piperidine ring, or a morpholine ring.

The solvent is preferably a solvent represented by a general formula (1a).

General formula (1a):

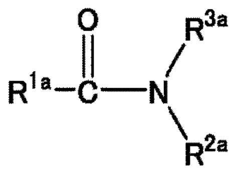

wherein $R^{1a}$ is a monovalent substituent, $R^{2a}$ and $R^{3a}$ are each independently H or a monovalent substituent, provided that the total number of carbon atoms of $R^{1a}$, $R^{2a}$, and $R^{3a}$ is 5 or more; and any two of $R^{1a}$, $R^{2a}$, and $R^{3a}$ optionally bond to each other to form a ring.

In the general formula (1a), the total number of carbon atoms of $R^{1a}$, $R^{2a}$, and $R^{3a}$ is 5 or more. That is, the types of the groups of $R^{1a}$, $R^{2a}$, and $R^{3a}$ are each selected such that the total number of carbon atoms is 5 or more. The upper limit of the total number of carbon atoms of $R^{1a}$, $R^{2a}$, and $R^{3a}$ is not limited, and, in some embodiments, may be 15 or less, 13 or less, or 11 or less.

In the general formula (1a), $R^{1a}$ is a monovalent substituent. The monovalent substituent is preferably an alkyl group, an alkoxyalkyl group, an acylalkyl group, an alkenyl group, an amino group, an aminoalkyl group, or a cycloalkyl group, and more preferably an alkyl group, an alkoxyalkyl group, an acylalkyl group, an alkenyl group, an amino group, or an aminoalkyl group.

In the general formula (1a), $R^{2a}$ and $R^{3a}$ are each independently H or a monovalent substituent. $R^{2a}$ and $R^{3a}$

are each independently preferably a monovalent substituent. The monovalent substituent is preferably an alkyl group, an alkoxyalkyl group, an acylalkyl group, an alkenyl group, an amino group, an aminoalkyl group, or a cycloalkyl group, and more preferably an alkyl group, an alkoxyalkyl group, a cycloalkyl group, or an alkenyl group.

Any two of $R^{1a}$, $R^{2a}$, and $R^{3a}$ optionally bond to each other to form a ring. In particular, preferably $R^{2a}$ and $R^{3a}$ bond to each other to form a ring together with the nitrogen atom to which $R^{2a}$ and $R^{3a}$ are attached. In addition, the ring optionally contains a heteroatom such as an oxygen atom as a ring-constituting atom. The ring is preferably a saturated ring. The number of members of the ring is not limited, and the ring is preferably 5- or 6-membered. The ring is preferably a pyrrolidine ring, an oxazoline ring, a piperidine ring, or a morpholine ring.

The solvent is more preferably at least one selected from the group consisting of a solvent represented by a general formula (1b-1) and a solvent represented by a general formula (1b-2) .

General formula (1b-1):

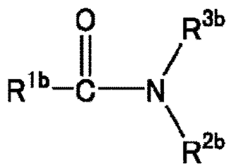

wherein $R^{1b}$ is an alkyl group, an alkoxyalkyl group, an acylalkyl group, an alkenyl group, an amino group, or an aminoalkyl group, $R^{2b}$ and $R^{3b}$ are each independently an alkyl group or an alkoxyalkyl group, and the total number of carbon atoms of $R^{1b}$, $R^{2b}$, and $R^{3b}$ is 5 or more; and $R^{2b}$ and $R^{3b}$ optionally bond with each other to form a ring together with the nitrogen atom to which $R^{2b}$ and $R^{3b}$ are attached, and the ring optionally contains an oxygen atom as a ring-constituting atom.

General formula (1b-2):

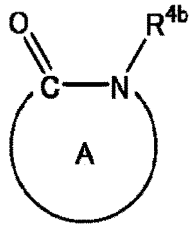

wherein ring A is a 5- or 6-membered amide ring, $R^{4b}$ is an alkyl group, a cycloalkyl group, or an alkenyl group, and the total number of carbon atoms of ring A and $R^{4b}$ is 5 or more.

In the general formula (1b-1), the total number of carbon atoms of $R^{1b}$, $R^{2b}$, and $R^{3b}$ is 5 or more. That is, the types of the groups of $R^{1b}$, $R^{2b}$, and $R^{3b}$ are each selected such that the total number of carbon atoms is 5 or more. The upper limit of the total number of carbon atoms of $R^{1a}$, $R^{2a}$, and $R^{3a}$ is not limited, and, in some embodiments, may be 15 or less, 13 or less, or 11 or less.

In the general formula (1b-1), $R^{1b}$ is an alkyl group, an alkoxyalkyl group, an acylalkyl group, an alkenyl group, an amino group, or an aminoalkyl group.

The alkyl group of $R^{1b}$ is preferably an alkyl group having 1 to 10 carbon atoms. When the number of carbon atoms of the alkyl group is 3 or more, the alkyl group may be linear in some embodiments, and may be branched in other embodiments.

The alkoxyalkyl group of $R^{1b}$ is preferably a group represented by the general formula: $-R^{1b1}-O-R^{1b2}$ wherein $R^{1b1}$ is an alkylene group having 1 to 5 carbon atoms, and $R^{1b2}$ is an alkyl group having 1 to 5 carbon atoms. When the number of carbon atoms of each of the alkyl group and the alkylene group is 3 or more, the alkyl group and the alkylene group may be linear in some embodiments, and may be branched in other embodiments.

The acylalkyl group of $R^{1b}$ is preferably a group represented by the general formula: $-R^{1b3}-CO-R^{1b4}$ wherein $R^{1b3}$ is an alkylene group having 1 to 5 carbon atoms, and $R^{1b4}$ is an alkyl group having 1 to 5 carbon atoms. When the number of carbon atoms of each of the alkyl group and the alkylene group is 3 or more, the alkyl group and the alkylene group may be linear in some embodiments, and may be branched in other embodiments.

The alkenyl group of $R^{1b}$ is preferably a group represented by the general formula: $-R^{1b5}-CR^{1b6}=CR^{1b7}$ wherein $R^{1b5}$ is a single bond or an alkylene group having 1 to 5 carbon atoms, and $R^{1b6}$ and $R^{1b7}$ are each independently H or an alkyl group having 1 to 5 carbon atoms. When the number of carbon atoms of each of the alkyl group and the alkylene group is 3 or more, the alkyl group and the alkylene group may be linear in some embodiments, and may be branched in other embodiments. The alkenyl group is preferably a vinyl group.

The amino group and the amino group contained in the aminoalkyl group of $R^{1b}$ is a monovalent functional group obtained by removing hydrogen from ammonia or a primary or secondary amine. When $R^{1b}$ is an amino group, $R^{1b}$ can form an amide bond together with the carbonyl group to which $R^{1b}$ is attached.

The amino group of $R^{1b}$ is preferably a group represented by the general formula: $-N-(R^{1b8})_2$ wherein $R^{1b8}$ is H or an alkyl group having 1 to 5 carbon atoms. When the number of carbon atoms of the alkyl group is 3 or more, the alkyl group may be linear in some embodiments, and may be branched in other embodiments. The amino group is preferably $-N-(CH_3)_2$ or $-N-(C_2H_5)_2$.

The aminoalkyl group of $R^{1b}$ is preferably a group represented by the general formula: $-R^{1b9}-N-(R^{1b8})_2$ wherein $R^{1b9}$ is an alkylene group having 1 to 5 carbon atoms, and $R^{1b8}$ is H or an alkyl group having 1 to 5 carbon atoms. When the number of carbon atoms of each of the alkyl group and the alkylene group is 3 or more, the alkyl group and the alkylene group may be linear in some embodiments, and may be branched in other embodiments.

In the general formula (1b-1), $R^{2b}$ and $R^{3b}$ are each independently an alkyl group or an alkoxyalkyl group.

The alkyl group of each of $R^{2b}$ and $R^{3b}$ is preferably an alkyl group having 1 to 10 carbon atoms. When the number of carbon atoms of the alkyl group is 3 or more, the alkyl group may be linear in some embodiments, and may be branched in other embodiments.

The alkoxyalkyl group of each of $R^{2b}$ and $R^{3b}$ is preferably a group represented by the general formula: $-R^{2b1}-OR^{2b2}$ wherein $R^{2b1}$ is an alkylene group having 1 to 5 carbon atoms, and $R^{2b2}$ is an alkyl group having 1 to 5 carbon atoms. When the number of carbon atoms of each of the alkyl group and the alkylene group is 3 or more, the alkyl group and the alkylene group may be linear in some embodiments, and may be branched in other embodiments.

$R^{2b}$ and $R^{3b}$ optionally bond with each other to form a ring together with the nitrogen atom to which $R^{2b}$ and $R^{3b}$ are attached, and the ring optionally contains an oxygen atom as a ring-constituting atom. The ring is preferably a saturated ring. The number of members of the ring is not limited, and the ring is preferably 5- or 6-membered. The ring is preferably a pyrrolidine ring, an oxazoline ring, a piperidine ring, or a morpholine ring.

In the general formula (1b-2), the total number of carbon atoms of ring A and $R^{4b}$ is 5 or more. That is, the types of the ring and the group of ring A and $R^{4b}$ are selected such that the total number of carbon atoms is 5 or more. The upper limit of the total number of carbon atoms of ring A and $R^{4b}$ is not limited, and, in some embodiments, may be 15 or less, 13 or less, or 11 or less.

Ring A is a 5- or 6-membered amide ring. Therefore, ring A is constituted of an alkylene group having 3 to 4 carbon atoms together with the carbon atom and the nitrogen atom. A hydrogen atom bonded to a carbon atom of an alkylene group constituting ring A may or may not be replaced with a substituent, and is preferably not replaced with a substituent. Examples of the substituent include an alkyl group such as a methyl group.

$R^{4b}$ is an alkyl group, a cycloalkyl group, or an alkenyl group.

The alkyl group of $R^{4b}$ is preferably an alkyl group having 1 to 10 carbon atoms. When the number of carbon atoms of the alkyl group is 3 or more, the alkyl group may be linear in some embodiments, and may be branched in other embodiments.

The cycloalkyl group of $R^{4b}$ is preferably a cycloalkyl group having 3 to 10 carbon atoms. The cycloalkyl group is preferably a cyclobutyl group, a cyclopentyl group, a cyclohexyl group, a cycloheptyl group, or a cyclooctyl group.

The alkenyl group of $R^{4b}$ is preferably a group represented by the general formula: $-R^{4b1}-CR^{4b2}=CR^{4b3}$ wherein $R^{4b1}$ is a single bond or an alkylene group having 1 to 5 carbon atoms, and $R^{4b2}$ and $R^{4b3}$ are each independently H or an alkyl group having 1 to 5 carbon atoms. When the number of carbon atoms of each of the alkyl group and the alkylene group is 3 or more, the alkyl group and the alkylene group may be linear in some embodiments, and may be branched in other embodiments. The alkenyl group is preferably a vinyl group.

The solvent is preferably at least one selected from the group consisting of 3-methoxy-N,N-dimethylpropanamide, N-ethyl-2-pyrrolidone (NEP), N-butyl-2-pyrrolidone (NBP), acryloylmorpholine, N-cyclohexyl-2-pyrrolidone, N-vinyl-2-pyrrolidone, 3-butoxy-N,N-dimethylpropanamide, N,N,N',N'-tetraethylurea, N,N-dimethylacetoacetamide, N-octyl-2-pyrrolidone, and N,N-diethylacetamide.

The solvent is, among these, more preferably at least one selected from the group consisting of 3-methoxy-N,N-dimethylpropanamide, N-ethyl-2-pyrrolidone, and N-butyl-2-pyrrolidone.

In particular, when a composition for electrode formation containing 3-methoxy-N,N-dimethylpropanamide as the solvent is used, the resulting battery tends to have a suppressed gas generation volume.

In particular, when a composition for electrode formation containing N-ethyl-2-pyrrolidone (NEP) as the solvent is used, the resulting battery tends to have a high temperature storage capacity retention rate.

In particular, when a composition for electrode formation containing N-butyl-2-pyrrolidone (NBP) as the solvent

is used, the resulting battery tends to be unlikely to increase in resistance.

The amount of the solvent in the composition for electrode formation is determined in consideration of coating of the current collector, formation of a thin film after drying, and the like. Usually, the proportion by mass of the copolymer to the solvent is 0.5:99.5 to 20:80.

<Further component>

The composition for electrode formation of the present disclosure preferably further contains a powder electrode material.

The powder electrode material is a powder electrode material used for a battery, and preferably includes an electrode active material. The electrode active material is divided into a positive electrode active material and a negative electrode active material. In the case of a lithium ion secondary battery, the positive electrode active material is not limited as long as it can electrochemically absorb and desorb a lithium ion, and is preferably a lithium composite oxide and more preferably a lithium transition metal composite oxide. The positive electrode active material is also preferably a lithium-containing transition metal phosphate compound. The positive electrode active material is also preferably a substance containing lithium and at least one transition metal, such as a lithium transition metal composite oxide or a lithium-containing transition metal phosphate compound.

Preferable examples of the transition metal of the lithium transition metal composite oxide include V, Ti, Cr, Mn, Fe, Co, Ni, and Cu, and specific examples of the lithium transition metal composite oxide include a lithium-cobalt composite oxide such as $LiCoO_2$, a lithium-nickel composite oxide such as $LiNiO_2$, a lithium-manganese composite oxide such as $LiMnO_2$, $LiMn_2O_4$, or $Li_2MnO_3$, and compounds obtained by replacement of a part of the transition metal atoms mainly constituting these lithium transition metal composite oxides with another metal such as Al, Ti, V, Cr, Mn, Fe, Co, Li, Ni, Cu, Zn, Mg, Ga, Zr, or Si. Examples of the compounds obtained by replacement include a lithium-nickel-manganese composite oxide, a lithium-nickel-cobalt-aluminum composite oxide, a lithium-nickel-cobalt-manganese composite oxide, a lithium-manganese-aluminum composite oxide, and a lithium-titanium composite oxide, and more specific examples include $LiNi_{0.5}Mn_{0.5}O_2$, $LiNi_{0.85}Co_{0.10}Al_{0.05}O_2$, $LiNi_{0.33}Co_{0.33}Mn_{0.33}O_2$, $LiNi_{0.5}Mn_{0.3}Co_{0.2}O_2$, $LiNi_{0.6}Mn_{0.2}Co_{0.2}O_2$, $LiNi_{0.8}Mn_{0.1}Co_{0.1}O_2$, $LiMn_{1.8}Al_{0.2}O_4$, $LiMn_{1.5}Ni_{0.5}O_4$, $Li_4Ti_5O_{12}$, and $LiNi_{0.82}Co_{0.15}Al_{0.03}O_2$.

Preferable examples of the transition metal of the lithium-containing transition metal phosphate compound include V, Ti, Cr, Mn, Fe, Co, Ni, and Cu, and specific examples of the lithium-containing transition metal phosphate compound include an iron phosphate compound such as $LiFePO_4$, $Li_3Fe_2(PO_4)_3$, or $LiFeP_2O_7$, a cobalt phosphate compound such as $LiCoPO_4$, and compounds obtained by replacement of a part of the transition metal atoms mainly constituting these lithium transition metal phosphate compounds with another metal such as Al, Ti, V, Cr, Mn, Fe, Co, Li, Ni, Cu, Zn, Mg, Ga, Zr, Nb, or Si.

In particular, $LiCoO_2$, $LiNiO_2$, $LiMn_2O_4$, $LiNi_{0.82}Co_{0.15}Al_{0.03}O_2$, $LiNi_{0.33}Mn_{0.33}C_{0.33}O_2$, $LiNi_{0.5}Mn_{0.3}Co_{0.2}O_2$, $LiNi_{0.6}Mn_{0.2}Co_{0.2}O_2$, $LiNi_{0.8}Mn_{0.1}Co_{0.1}O_2$, and $LiFePO_4$ are preferable from the viewpoint of high voltage, high energy density, charge/discharge cycle characteristics, or the like.

In addition, the lithium transition metal composite oxide is preferably a lithium-nickel-based composite oxide, and more preferably a lithium-nickel-based composite oxide represented by the general formula (7):

general formula (7) : $Li_yNi_{1-x}M_xO_2$

wherein x is $0.01 \le x \le 0.5$, y is $0.9 \le y \le 1.2$, and M represents a metal atom excluding Li and Ni. The lithium transition metal composite oxide having such a high nickel content is beneficial for increasing the capacity of a secondary battery.

In the general formula (7), x is a coefficient satisfying $0.01 \le x \le 0.5$, and from the viewpoint of being able to obtain a secondary battery having a higher capacity, preferably $0.05 \le x \le 0.4$ and more preferably $0.10 \le x \le 0.3$.

In the general formula (7), examples of the metal atom of M include V, Ti, Cr, Mn, Fe, Co, Cu, Al, Zn, Mg, Ga, Zr, and Si. The metal atom of M is preferably a transition metal such as V, Ti, Cr, Mn, Fe, Co, or Cu, or a combination of any of the above transition metals and a further metal such as Al, Ti, V, Cr, Mn, Fe, Co, Cu, Zn, Mg, Ga, Zr, or Si.

The lithium transition metal composite oxide having a high nickel content is preferably at least one selected from the group consisting of $LiNi_{0.80}Co_{0.15}Al_{0.05}O_2$, $LiNi_{0.82}Co_{0.15}Al_{0.03}O_2$, $LiNi_{0.33}M_{0.33}C_{0.33}O_2$, $LiNi_{0.5}Mn_{0.3}Co_{0.2}O_2$, $LiNi_{0.6}Mn_{0.2}Co_{0.2}O_2$, $LiNi_{0.8}Mn_{0.1}Co_{0.1}O_2$, and $LiNi_{0.90}Mn_{0.05}Co_{0.05}O_2$, and more preferably at least one selected from the group consisting of $LiNi_{0.82}CO_{0.82}Al_{0.03}O_2$, $LiNi_{0.5}Mn_{0.2}Co_{0.2}O_2$, and $LiNi_{0.8}Mn_{0.1}Co_{0.1}O_2$.

In addition, these positive electrode active materials used may each have a surface to which a substance different in formulation from the substance mainly constituting the positive electrode active material adheres. Examples of the surface adhering substance include an oxide such as aluminum oxide, silicon oxide, titanium oxide, zirconium oxide, magnesium oxide, calcium oxide, boron oxide, antimony oxide, or bismuth oxide, a sulfate such as lithium sulfate, sodium sulfate, potassium sulfate, magnesium sulfate, calcium sulfate, or aluminum sulfate, and a carbonate such as lithium carbonate, calcium carbonate, or magnesium carbonate.

These surface adhering substances can each be adhered to the surface of a positive electrode active material, for example, by a method involving dissolving or suspending the surface adhering substance in a solvent to add the resulting solution or suspension to the positive electrode active material by impregnation and drying the same, a method involving dissolving or suspending a surface adhering substance precursor in a solvent to add the resulting solution or suspension to the positive electrode active material by impregnation and then reacting these by heating or the like, or a method involving adding the surface adhering substance to a positive electrode active substance precursor and simultaneously calcining these.

The lower limit of the amount by mass of the surface adhering substance used is preferably 0.1 ppm or more, more preferably 1 ppm or more, and further preferably 10 ppm or more, and the upper limit thereof is preferably 20% or less, more preferably 10% or less, and further preferably 5% or less based on the positive electrode active material. The surface adhering substance can suppress the oxidation reaction of the non-aqueous electrolytic solution on the surface of the positive electrode active material and improve the battery life, and if the amount thereof adhered is too small, the effects thereof are not sufficiently developed, and if the amount is too large, the resistance may increase because the surface adhering substance inhibits the entry and exit of a lithium ion.

A particle of the positive electrode active material may have a blocky shape, a polyhedral shape, a spherical shape, an oval shape, a plate-like shape, a needle-like shape, a columnar shape, or the like as conventionally used, and among these, preferably, a primary particle aggregates to form a secondary particle that has a spherical shape or an oval shape. Usually, the active material in the electrode expands and contracts with the charge and discharge of an electrochemical element, and thus the stress thereof is likely to cause a deterioration such as destruction of the active material or disconnection of a conductive path. Because of this, an active material in which a primary particle aggregates to form a secondary particle is more preferable than a single particle active material containing only a primary particle because the former relaxes the stress of expansion and contraction and prevents a deterioration. In addition, a particle having a spherical shape or an oval shape is more preferable than an axially oriented particle such as a particle having a plate-like shape because the former particle is less oriented when an electrode is molded and thus the electrode also expands and contracts less during charge and discharge, and even when the former particle is mixed with a conductive agent in electrode creation, it is easy to mix the former particle uniformly.

The tap density of the positive electrode active material is usually 1.3 g/cm$^3$ or more, preferably 1.5 g/cm$^3$ or more, further preferably 1.6 g/cm$^3$ or more, and most preferably 1.7 g/cm$^3$ or more. If the tap density of the positive electrode active material is lower than the above lower limit, when forming a positive electrode material layer, the required amount of a dispersion medium increases, the required amount of a conductive agent or a copolymer increases, and the rate of filling of the positive electrode material layer with the positive electrode active material may be limited to limit the battery capacity. A high density positive electrode material layer can be formed by using a metal composite oxide powder having a high tap density. In general, a larger tap density is more preferable, and there is no particular upper limit thereon, and if the tap density is too large, the diffusion of a lithium ion using a non-aqueous electrolytic solution as a medium in the positive electrode material layer may be rate-determining to easily reduce the load characteristics, and thus the upper limit of the tap density is usually 2.5 g/cm$^3$ or less and preferably 2.4 g/cm$^3$ or less.

The density determined as follows is defined as the tap density of the positive electrode active material: a sample is passed through a sieve having an opening size of 300 μm, dropped into a tapping cell of 20 cm$^3$ to fill the cell volume, then tapping is carried out at a stroke length of 10 mm 1000 times using a powder density measuring instrument (for example, Tap Denser manufactured by Seishin Enterprise Co., Ltd.), and the density is determined from the volume at that time and the weight of the sample.

The median diameter d50 (secondary particle size when a primary particle aggregates to form a secondary particle) of the particle of the positive electrode active material is usually 0.1 μm or more, preferably 0.5 μm or more, more preferably 1 μm or more, most preferably 3 μm or more, and usually 20 μm or less, preferably 18 μm or less, more preferably 16 μm or less, most preferably 15 μm or less. If d50 is lower than the above lower limit, it may not be possible to obtain a high bulk density product, and if d50 exceeds the upper limit, for example the following problems may occur: it takes time to diffuse lithium in the particles, resulting in reduction in battery performance, and when creating a positive electrode of a battery, that is, slurrying an active material and a conductive agent, a copolymer, or the like using a solvent to apply the resulting slurry in the form of a thin film, a streak is formed. Here, mixing of two or more positive electrode active materials having different median diameters d50 can also further improve the filling property when creating a positive electrode.

The median diameter d50 in the present disclosure is measured using a known laser diffraction/scattering type particle size distribution measurement apparatus. When LA-920 manufactured by HORIBA, Ltd. is used as a particle size distribution analyzer, d50 is measured by using a 0.1% by mass sodium hexametaphosphate aqueous solution as a dispersion medium used for the measurement, carrying out ultrasonic dispersion for 5 minutes, and then setting the measurement refractive index to 1.24.

When a primary particle aggregates to form a secondary particle, the average primary particle size of the positive electrode active material is usually 0.01 μm or more, preferably 0.05 μm or more, further preferably 0.08 μm

or more, most preferably 0.1 μm or more, and usually 3 μm or less, preferably 2 μm or less, further preferably 1 μm or less, most preferably 0.6 μm or less. If the average primary particle size exceeds the above upper limit, it is difficult to form a spherical secondary particle, which adversely affects the powder filling property and greatly reduces the specific surface area, and thus battery performance such as output characteristics may be likely to decrease. On the contrary, if the average primary particle size is lower than the above lower limit, a crystal is usually underdeveloped, which may cause a problem such as poor charge/discharge reversibility. The primary particle size is measured by observation using a scanning electron microscope (SEM). Specifically, the primary particle size is determined by obtaining the value of the longest segment of a straight line in the horizontal direction formed by the left and right boundary lines of a primary particle on a photograph at a magnification of 10,000 times for each of any 50 primary particles and averaging the obtained values.

The BET specific surface area of the positive electrode active material is 0.2 $m^2/g$ or more, preferably 0.3 $m^2/g$ or more, further preferably 0.4 $m^2/g$ or more, and 4.0 $m^2/g$ or less, preferably 2.5 $m^2/g$ or less, further preferably 1.5 $m^2/g$ or less. If the BET specific surface area is smaller than this range, the battery performance easily decreases, and if the BET specific surface area is larger than this range, the tap density does not easily increase, and a problem may easily occur in the coating performance when forming the positive electrode material layer.

The BET specific surface area is defined as a value determined using a surface area meter (for example, a fully automatic surface area measurement apparatus manufactured by Ohkura Riken) by pre-drying a sample at 150°C for 30 minutes under a nitrogen flow and then measuring the sample by the nitrogen adsorption BET single point method according to the gas flow method using a nitrogen helium mixed gas accurately adjusted such that the value of nitrogen pressure relative to atmospheric pressure is 0.3.

The method for producing a positive electrode active material may be a general method used as a method for producing an inorganic compound. In particular, various methods can be considered for creating a spherical or oval active material, and examples thereof include a method for obtaining an active material by dissolving or pulverizing and dispersing a transition metal raw material such as a transition metal nitrate or sulfate and optionally a raw material of another element in a solvent such as water and regulating the pH while stirring to create and recover a spherical precursor, optionally drying this precursor, then adding a Li source such as LiOH, $Li_2CO_3$, or $LiNO_3$, and calcining the resulting mixture at a high temperature, a method for obtaining an active material by dissolving or pulverizing and dispersing a transition metal raw material such as a transition metal nitrate, sulfate, hydroxide, or oxide and optionally a raw material of another element in a solvent such as water, drying and molding the resulting solution or suspension using a spray dryer or the like to obtain a spherical or oval precursor, adding a Li source such as LiOH, $Li_2CO_3$, or $LiNO_3$ to this precursor, and calcining the resulting mixture at a high temperature, and a method for obtaining an active material by dissolving or pulverizing and dispersing a transition metal raw material such as a transition metal nitrate, sulfate, hydroxide, or oxide, a Li source such as LiOH, $Li_2CO_3$, or $LiNO_3$, and optionally a raw material of another element in a solvent such as water, drying and molding the resulting solution or suspension using a spray dryer or the like to obtain a spherical or oval precursor, and calcining this precursor at a high temperature.

In the present disclosure, one positive electrode active material powder may be used alone, or two or more positive electrode active material powders having different formulations or different powder physical characteristics may be used together in any combination and ratio.

The negative electrode active material is not limited as long as it can electrochemically absorb and desorb a lithium ion, and examples thereof include a carbonaceous material, a metal oxide such as tin oxide or silicon oxide, a metal composite oxide, simple lithium and a lithium alloy such as a lithium-aluminum alloy, and a metal that can form an alloy with lithium such as Sn or Si. One of these may be used alone or two or more thereof may be used together in any combination and ratio. Among these, a carbonaceous material or a lithium composite oxide is preferably used from the viewpoint of safety.

The metal composite oxide is not limited as long as it can absorb and desorb lithium, and from the viewpoint of high current density charge/discharge characteristics, it is preferable to contain titanium and/or lithium as a constituent.

From the viewpoint of a good balance between the initial irreversible capacity and the high current density charge/discharge characteristics, the carbonaceous material is preferably selected from:

(1) natural graphite;

(2) an artificial carbonaceous substance and an artificial graphite substance; and a carbonaceous material obtained by one or more times of heat treatment in the range of 400°C to 3,200°C of a carbonaceous substance {for example, natural graphite, coal-based coke, petroleum-based coke, coal-based pitch, petroleum-based pitch, or a material obtained by oxidation treatment of any of these pitches; needle coke, pitch coke, or a carbon material obtained by partial graphitization of any of these cokes; a pyrolysate of an organic substance such as furnace black, acetylene black, or pitch-based carbon fiber; a carbonizable organic substance (for example, coal tar pitches from soft pitch to hard pitch; a coal-based heavy oil such as dry distillation/liquefaction oil; a straight-run heavy oil such as atmospheric residue or vacuum residue; a cracking-derived petroleum heavy oil such as ethylene tar as a byproduct

generated in thermal cracking of crude oil, naphtha, or the like; further, an aromatic hydrocarbon such as acenaphthylene, decacyclene, anthracene, or phenanthrene; a N-ring compound such as phenazine or acridine; a S-ring compound such as thiophene or bithiophene; a polyphenylene such as biphenyl or terphenyl; polyvinyl chloride, polyvinyl alcohol, polyvinyl butyral, or a material obtained by insolubilizing any thereof; a nitrogen-containing organic polymer such as polyacrylonitrile or polypyrrole; a sulfur-containing organic polymer such as polythiophene or polystyrene; a natural polymer such as a polysaccharide typified by cellulose, lignin, mannan, polygalacturonic acid, chitosan, or saccharose; a thermoplastic resin such as polyphenylene sulfide or polyphenylene oxide; a thermosetting resin such as a furfuryl alcohol resin, a phenolformaldehyde resin, or an imide resin) and a carbide of any of these; and a solution obtained by dissolving a carbonizable organic substance in a low-molecular-weight organic solvent such as benzene, toluene, xylene, quinoline, or n-hexane, and a carbide thereof};

(3) a carbonaceous material in which the negative electrode material layer is composed of at least two or more carbonaceous substances having different crystallinities and/or has an interface at which the carbonaceous substances having different crystallinities are in contact with each other; and

(4) a carbonaceous material in which the negative electrode material layer is composed of at least two carbonaceous substances having different orientations and/or has an interface at which the carbonaceous substances having different orientations are in contact with each other.

The content of the electrode active material (positive electrode active material or negative electrode active material) is preferably 40% by mass or more in the composition for electrode formation in order to increase the capacity of the electrode obtained.

The powder electrode material may further include a conductive agent. Examples of the conductive agent include a carbon black such as acetylene black or ketjen black, a carbon material such as graphite, a carbon fiber, a carbon nanotube, a carbon nanohorn, and graphene.

The proportion by mass of the powder electrode material (active material and conductive agent) to the above copolymer in the composition for electrode formation is usually about 80:20 to 99.5:0.5 and is determined in consideration of the holding of the powder components, the adhesion to the current collector, and the conductivity of the electrode.

The composition for electrode formation may contain, for example, an acrylic resin such as polyacrylic acid, polymethacrylate, or polymethyl methacrylate, a polyimide, polyamide, or polyamideimide-based resin, styrene elastomer, butadiene elastomer, or styrene-butadiene elastomer.

In order to improve the slurry stability, the composition for electrode formation may contain a dispersant such as a resin-based dispersant having a surfactant action and the like, a cationic surfactant, or a nonionic surfactant.

Examples of a method for preparing the composition for electrode formation include a method involving dispersing and mixing the powder electrode material into a solution or a dispersion obtained by dissolving or dispersing the copolymer in the solvent. Then, the obtained composition for electrode formation is uniformly applied to a current collector such as a metal foil or a metal net, dried, and optionally pressed to form a thin electrode material layer on the current collector to form a thin-film electrode. In addition, a composition for electrode formation may be created by first mixing the copolymer and a powder of the electrode material and then adding the solvent.

The composition for electrode formation of the present disclosure can be suitably used as a material for forming an electrode of a battery such as a secondary battery or a capacitor. The battery may be a primary battery in some embodiments, and may be a storage battery (secondary battery) or an energy storage element in other embodiments. In some embodiments, the battery may be a non-aqueous electrolytic solution battery. The non-aqueous electrolytic solution battery includes all batteries including an electrolytic solution and a power generation element. Examples of the non-aqueous electrolytic solution battery include a lithium ion primary battery, a lithium ion secondary battery, a nickel hydrogen battery, a lithium ion capacitor, and an electric double layer capacitor.

The composition for electrode formation of the present disclosure may be a composition for positive electrode formation used to create a positive electrode in some embodiments, and may be a composition for negative electrode formation used to create a negative electrode in other embodiments. The electrode material layer formed from the composition for electrode formation of the present disclosure may be a positive electrode material layer in some embodiments, and may be a negative electrode material layer in other embodiments.

<Electrode>

The electrode of the present disclosure includes a current collector and an electrode material layer. The electrode material layer is formed using the composition for electrode formation of the present disclosure, and may be provided on one side of the current collector in some embodiments, and may be on each of both sides thereof in other embodiments.

The electrode of the present disclosure includes an electrode material layer formed using the composition for electrode formation of the present disclosure and thus has excellent flexibility and conductivity, has the current collector and the electrode material layer sufficiently adhered to each other, and can form a secondary battery having excellent

battery characteristics.

The density of the electrode material layer is preferably 2.0 to 5.0 g/$cm^3$, and more preferably 2.5 to 4.5 g/$cm^3$.

The density of the electrode material layer can be calculated from the mass and the volume of the electrode material layer.

The thickness of the electrode material layer is preferably 20 μm or more, more preferably 30 μm or more, further preferably 40 μm or more, particularly preferably 45 μm or more, and preferably 170 μm or less, more preferably 150 μm or less, from the viewpoint of obtaining further superior battery characteristics. In addition, the thickness of the electrode material layer may be 85 μm or less in some embodiments, and may be less than 69 μm in other embodiments.

The thickness of the electrode material layer can be measured with a micrometer. The thickness of the electrode material layer in the present disclosure is the thickness per side when the electrode material layer is provided on each of both sides of the current collector.

Examples of the current collector included in the electrode of the present disclosure include a metal foil or a metal net of iron, stainless steel, copper, aluminum, nickel, titanium, or the like, and among these, aluminum foil is preferable.

The electrode of the present disclosure can be suitably produced by a production method involving applying the composition for electrode formation of the present disclosure to a current collector. After applying the composition for electrode formation, further, the coating film may be dried, and the resulting dry coating film may be pressed.

The amount of the composition for electrode formation applied to the current collector is preferably 10 mg/$cm^2$ or more, more preferably 17.5 mg/$cm^2$ or more, and preferably 60 mg/$cm^2$ or less, more preferably 50 mg/$cm^2$ or less. The amount of the composition for electrode formation applied is the dry weight of the composition for electrode formation per unit area.

<Secondary battery>

In addition, according to the present disclosure, a secondary battery including the above electrode is provided.

The secondary battery of the present disclosure includes an electrode formed using the composition for electrode formation of the present disclosure, and thus has a high temperature storage capacity retention rate, and has a small gas generation volume, and is unlikely to increase in resistance.

The secondary battery of the present disclosure is preferably one including a positive electrode, a negative electrode, and a non-aqueous electrolytic solution, wherein one or both of the positive electrode and the negative electrode is/are the electrode(s) described above. In addition, the secondary battery of the present disclosure is preferably one including a positive electrode, a negative electrode, and a non-aqueous electrolytic solution, wherein the positive electrode is the electrode described above. In addition, a separator may be interposed between the positive electrode and the negative electrode.

The non-aqueous electrolytic solution is not limited, and may be one or two or more of known solvents such as propylene carbonate, ethylene carbonate, butylene carbonate, γ-butyl lactone, 1,2-dimethoxyethane, 1,2-diethoxyethane, dimethyl carbonate, diethyl carbonate, or ethyl methyl carbonate. Any conventionally known electrolyte can also be used, and $LiClO_4$, $LiAsF_6$, $LiPF_6$, $LiBF_4$, LiCl, LiBr, $CH_3SO_3Li$, $CF_3SO_3Li$, cesium carbonate, or the like can be used.

The electrode of the present disclosure has excellent flexibility and conductivity, has the current collector and the electrode material layer sufficiently adhered to each other, and can form a secondary battery having excellent battery characteristics, and thus can be suitably used as an electrode for a wound type secondary battery. In addition, in some embodiments, the secondary battery of the present disclosure may be a wound type secondary battery.

The electrode of the present disclosure is useful not only for the lithium ion secondary battery using a liquid electrolyte described above, but also for a polymer electrolyte lithium secondary battery, as an electrode for a non-aqueous electrolyte secondary battery. In addition, the electrode of the present disclosure is also useful for an electric double layer capacitor.

The embodiments have been described above, and it will be understood that various modifications of the embodiments and details are possible without departing from the spirit and scope of the claims.

## EXAMPLES

Next, the embodiments of the present disclosure will be described with reference to Examples, but the present disclosure is not limited only to the Examples.

The numerical values in the Examples were measured by the following methods.

(Polymer formulation)

The formulation of a copolymer and a PVdF was measured by a solution NMR method.

Measuring apparatus: VNMRS400 manufactured by Varian, Inc.
Resonance frequency: 376.04 (Sfrq)
Pulse width: 30° (pw = 6.8)

(Content of polar group-containing monomer unit in polymer)

The content of a polar group-containing monomer unit (acrylic acid unit) was measured by acid-base titration of a carboxyl group. Specifically, about 0.5 g of a copolymer was dissolved in acetone at a temperature of 70 to 80°C. 5 ml of water was added dropwise under vigorous stirring to avoid coagulation of the copolymer. The resulting mixture was subjected to titration with a NaOH aqueous solution having a concentration of 0.1 N until complete neutralization of acidity, with neutral transition at about -270 mV. From the measurement results, the amount of substance of the polar group-containing monomer unit contained in 1 g of the copolymer was determined to calculate the content of the polar group-containing monomer unit.

(Weight average molecular weight)

The weight average molecular weight was measured by gel permeation chromatography (GPC). The weight average molecular weight was calculated from data (reference: polystyrene) obtained by measurement using AS-8010, CO-8020, and columns (three GMHHR-H connected in series) manufactured by Tosoh Corporation and RID-10A manufactured by Shimadzu Corporation under a flow of dimethylformamide (DMF) as a solvent at a flow rate of 1.0 ml/min.

Comparative Example 1

(Preparation of composition for electrode formation (binder solution))

PVdF (VdF homopolymer) shown in Table 1 was added to 3-methoxy-N,N-dimethylpropanamide such that the concentration was 8% by mass, and the resulting mixture was stirred at 25°C or 50°C for 24 hours. How PVdF was dissolved was observed and evaluated according to the following criteria.

<Solubility>

1 Not dissolved
2 Dissolved by heating (50°C) in more than 12 hours and 24 hours or less
3 Dissolved by heating (50°C) in 12 hours or less
4 Dissolved at normal temperature (25°C) in more than 12 hours and 24 hours or less
5 Dissolved at normal temperature (25°C) in 12 hours or less

(Preparation of composition for electrode formation (positive electrode mixture slurry))

A positive electrode active material (NMC622 ($LiNi_{0.6}Mn_{0.2}Co_{0.2}O_2$) ) and a conductive agent (acetylene black) were added to the binder solution obtained above, and the resulting mixture was sufficiently mixed using a stirrer to prepare a positive electrode mixture. The mass ratio of the positive electrode active material, the conductive agent, and the binder in the positive electrode mixture was 97/1.5/1.5. In addition, the solid concentration of the positive electrode mixture was 75% by mass. The viscosity change rate of the resulting positive electrode mixture slurry was measured and evaluated according to the following criteria.

<Slurry stability>

1 Viscosity increase rate of 400% or more
2 Viscosity increase rate of 350% or more and less than 400%

3 Viscosity increase rate of 300% or more and less than 350%
4 Viscosity increase rate of 200% or more and less than 300%
5 Viscosity increase rate of less than 200%

The viscosity increase rate was measured by the following method. The viscosity of the positive electrode mixture 10 minutes after the start of measurement was measured using a B-type viscometer (manufactured by Brookfield, DV2T) under conditions of 25°C, spindle LV-04 (64), and a rotation speed of 6 rpm. The viscosity increase rate (Xn) was determined from the viscosity (η0) of the positive electrode mixture measured immediately after the preparation of the positive electrode mixture and the viscosity (ηn) 24 hours after the preparation of the mixture, by the following expression.

$$Xn = \eta n/\eta 0 \times 100\ [\%]$$

(Creation of positive electrode including positive electrode material layer on one side)

The obtained positive electrode mixture was uniformly applied to one side of a positive electrode current collector (aluminum foil having a thickness of 20 μm) such that the coating mass was 22.5 mg/cm$^2$, and 3-methoxy-N,N-dimethylpropanamide was completely volatilized, then the positive electrode current collector was pressed using a roll press by applying a pressure of 10 tons to create a positive electrode including a positive electrode material layer and the positive electrode current collector.

(Creation of positive electrode including positive electrode material layer on each of both sides)

The obtained positive electrode mixture was uniformly applied to both sides of a positive electrode current collector (aluminum foil having a thickness of 20 μm) such that the coating mass was 30.0 mg/cm$^2$ on each side, and 3-methoxy-N,N-dimethylpropanamide was completely volatilized, then the positive electrode current collector was pressed using a roll press by applying a pressure of 6 tons to create a positive electrode including a positive electrode material layer and the positive electrode current collector.

<Adhesion between positive electrode material layer and positive electrode current collector of positive electrode>

The positive electrode including a positive electrode material layer on one side was cut off to create a 1.2 cm × 7.0 cm test piece. The positive electrode material layer side of the test piece was fixed to a movable jig using a double-sided tape, then a tape was attached to the surface of a positive electrode current collector, and the stress (N/cm) when the tape was pulled at an angle of 90 degrees at a speed of 100 mm/min were measured using an autograph as a peel strength.

<Positive electrode flexibility>

A 2 cm × 20 cm test piece was created by cutting off the positive electrode including a positive electrode material layer on each of both sides. Using a cylindrical mandrel bending tester (manufactured by Allgood), a mandrel having a diameter of 3 mm was set in the tester, the test piece was held and fixed thereto with a main body clamp, and then the positive electrode material layer was visually observed when bringing a roller close to the test piece and evenly rotating a handle by 180° over a period of 1 to 2 seconds, and evaluated according to the following criteria.

2: No crack was observed.
1: A crack was observed, but breakage of the positive electrode material layer was not observed.
0: The positive electrode material layer was broken.

<Conductivity>

The positive electrode mixture was applied onto a PET film using a doctor blade and then dried, and the surface resistance of the coating film was measured. Loresta-GP (manufactured by Mitsubishi Chemical Analytech Co., Ltd.) was used for the measurement (according to JIS K7194).

(Preparation of electrolytic solution)

Ethylene carbonate, which is a high dielectric constant solvent, and ethylmethyl carbonate, which is a low viscosity solvent, were mixed such that the volume ratio therebetween was 30:70, $LiPF_6$ was added to the resulting mixture in such a way as to have a concentration of 1.0 mol/liter, and 2% by mass of vinylene carbonate was added to this mixture to obtain a non-aqueous electrolytic solution.

(Creation of lithium ion secondary battery)

The positive electrode including a positive electrode material layer on one side was cut out into a shape having a coated portion (positive electrode material layer) having a width of 50 mm and a length of 30 mm and an uncoated portion having a width of 5 mm and a length of 9 mm.

1 Part by mass of an aqueous dispersion of carboxymethyl cellulose sodium (concentration of carboxymethyl cellulose sodium of 1% by mass) and 1 part by mass of an aqueous dispersion of styrene butadiene elastomer (concentration of styrene butadiene elastomer of 50% by mass) as a thickener and a binder were added to 98 parts by mass of artificial graphite and mixed using a disperser to form a slurry. The obtained slurry was applied to a copper foil having a thickness of 20 μm, dried, and rolled using a press, the rolled foil was cut out into a shape having a coated portion (negative electrode material layer) having a width of 52 mm and a length of 32 mm and an uncoated portion having a width of 5 mm and a length of 9 mm, and the cut foil was used as the negative electrode.

The positive electrode and the negative electrode were opposed to each other via a microporous polyethylene film (separator) having a thickness of 20 μm, the non-aqueous electrolytic solution obtained above was injected, the non-aqueous electrolytic solution was caused to sufficiently permeate into the separator and the like, and then the workpiece was sealed, precharged, and aged to create a lithium ion secondary battery (aluminum laminate cell).

The high temperature storage capacity retention rate, the gas volume change rate, and the resistance increase rate of the obtained lithium ion secondary battery were evaluated.

[Initial characteristic evaluation]

At 25°C, in the state of being sandwiched between plates and pressurized, the lithium ion secondary battery was charged to 4.2 V at a constant current corresponding to 0.2 C, and then discharged to 3.0 V at a constant current of 0.2 C. 2 cycles of this operation were carried out to stabilize the battery, and in the third cycle, the battery was charged to 4.2 V at a constant current of 0.2 C, then charged at a constant voltage of 4.2 V until the current value was 0.05 C, and discharged to 3.0 V at a constant current of 0.2 C. After that, in the fourth cycle, the battery was charged to 4.2 V at a constant current of 0.2 C, then charged at a constant voltage of 4.2 V until the current value was 0.05 C, and discharged to 3.0 V at a constant current of 0.2 C to determine the initial discharge capacity. After that, the battery was charged to 4.2 V at a constant current of 0.2 C, and then charged at a constant voltage of 4.2 V until the current value was 0.05 C to determine the initial resistance.

Here, 1 C represents a current value for discharging the reference capacity of a battery in 1 hour, 5 C represents a current value 5 times that current value, 0.1 C represents a current value 1/10 thereof, and 0.2 C represents a current value 1/5 thereof.

[High temperature storage test]

The lithium ion secondary battery for which the initial characteristic evaluation was completed was stored at a high temperature under conditions of 85°C and 36 hours. The battery was sufficiently cooled, then the volume of the battery was measured by the Archimedes method, and the gas volume change rate was determined from the volume change between before and after high temperature storage.

Next, the battery was discharged to 3 V at 0.5 C at 25°C, the residual capacity after high temperature storage was determined, and the high temperature storage capacity retention rate (%) was determined based on the following expression. Further, the battery was charged to 4.2 V at a constant current of 0.2 C, then charged at a constant voltage of 4.2 V until the current value was 0.05 C, and then discharged to 3 V at 0.5 C. After that, the battery was charged to 4.2 V at a constant current of 0.2 C, and then charged at a constant voltage of 4.2 V until the current value was 0.05 C, the resistance after high temperature storage was measured, and the resistance increase rate (%) was determined based on the following expression.

High temperature storage capacity retention rate (%) = (residual capacity)/(initial discharge capacity) × 100

Gas volume change rate (%) = (volume (ml) after high temperature storage)/(volume (ml) before high temperature storage) × 100

Resistance increase rate (%) = (resistance (Ω) after high temperature storage)/(initial resistance (Ω)) × 100

Examples 1 to 18

Compositions for electrode formation (binder solutions and positive electrode mixture slurries) were prepared, and positive electrodes and lithium ion secondary batteries were created, in the same manner as in Comparative Example 1, except that the copolymers shown in Table 1 (copolymers containing VdF unit and a unit of an other monomer other than VdF) were used instead of PVdF (VdF homopolymer), and these were evaluated in the same manner as in Comparative Example 1.

Results thereof are shown in Table 1.

[Table 1]

Table 1

| | Solvent | Type of other monomer ($\alpha$) | Formulation (mol%) | | Weight average molecular weight | Solubility | Characteristics | | | | Battery characteristics | | |
|---|---|---|---|---|---|---|---|---|---|---|---|---|---|
| | | | VdF | a | | | Slurry stability | Adhesion (N/cm) | Flexibility | Surface resistance ($\Omega\cdot$cm) | High temperature storage capacity retention rate (%) | Gas volume change rate (%) | Resistance increase rate (%) |
| Comparative Example 1 | 3-Methoxy-N.N-dimethylpropanamide | | 100 | | 900000 | 1 | 2 | 0.23 | 0 | 50 | 60 | 0.30 | 184 |
| Example 2 | | TFE | 95 | 5 | 1050000 | 4 | 4 | 021 | 2 | 22 | 88 | 0.14 | 119 |
| Examples | | | 90 | 10 | 1200000 | 5 | 5 | 0.22 | 2 | 20 | 89 | 0.13 | 115 |
| Example 4 | | | 80 | 20 | 980000 | 5 | 5 | 0.23 | 2 | 18 | 90 | 0.10 | 114 |
| Example 5 | | | 70 | 30 | 1180000 | 5 | 4 | 0.22 | 2 | 19 | 88 | 0.12 | 118 |
| Example 6 | | CTFE | 95 | 5 | 800000 | 4 | 2 | 0.27 | 2 | 24 | 86 | 0.11 | 120 |
| Example 7 | | | 90 | 10 | 840000 | 5 | 3 | 0.28 | 2 | 23 | 85 | 0.12 | 123 |
| Example 8 | | 2.3.3.3-Tetrafluoropropene | 95 | 5 | 650000 | 5 | 3 | 0.22 | 1 | 19 | 86 | 0.13 | 127 |
| Example 9 | | | 90 | 10 | 700000 | 5 | 4 | 0.23 | 2 | 17 | 85 | 0.14 | 121 |
| Example 10 | | | 80 | 20 | 450000 | 5 | 5 | 024 | 2 | 15 | 87 | 0.11 | 122 |
| Example 11 | | | 70 | 30 | 600000 | 5 | 5 | 0.23 | 2 | 17 | 85 | 0.15 | 137 |
| Example 12 | | Acrylic acid | 99.9 | 0.1 | 1250000 | 4 | 3 | 0.28 | 1 | 26 | 85 | 0.20 | 143 |
| Example 13 | | | 99.5 | 0.5 | 1200000 | 4 | 3 | 0.29 | 1 | 28 | 84 | 021 | 140 |
| Example 14 | | | 99 | 1 | 1100000 | 5 | 3 | 0.3 | 1 | 29 | 84 | 0.22 | 151 |
| Example 15 | | HFP | 95 | 5 | 700000 | 4 | 3 | 025 | 1 | 30 | 78 | 0.23 | 152 |
| Example 16 | | | 90 | 10 | 900000 | 4 | 4 | 0.26 | 1 | 28 | 77 | 0.24 | 162 |
| Example 17 | | | 80 | 20 | 550000 | 5 | 4 | 0.28 | 2 | 27 | 76 | 0.25 | 155 |
| Example 18 | | PMVE | 95 | 5 | 1050000 | 4 | 3 | 0.24 | 2 | 24 | 82 | 0.18 | 133 |

"Other monomer (α)" shown in Tables 1 to 4 represents, in a copolymer containing VdF unit and a unit of an other monomer other than VdF, the type of a other monomer (α) forming the other monomer unit. In addition, "Formulation (mol%)" shown in Table 1 represents the content of the VdF unit (mol%) and the content of the other monomer (α) unit (mol%) in PVdF (homopolymer) and the copolymer.

Examples 19 to 52 and Comparative Examples 2 to 10

Compositions for electrode formation (binder solutions and positive electrode mixture slurries) were prepared, and positive electrodes and lithium ion secondary batteries were created, in the same manner as in Comparative Example 1 and Examples 1 to 18, except that the solvents shown in Tables 2 to 4 were used instead of 3-methoxy-N,N-dimethylpropanamide, and these were evaluated in the same manner as in Comparative Example 1. Results are shown in Tables 2 to 4.

[Table 2]

Table 2

| | Solvent | Type of other monomer (α) | Formulation (md%) | | Weight average molecular weight | Solubility | Characteristics | | | | Battery characteristics | | |
|---|---|---|---|---|---|---|---|---|---|---|---|---|---|
| | | | VdF | a | | | Slurry stabiity | Adhesion (N/cm) | Flexbility | Surface resistance (Ω·cm) | High temperature storage capacity retention rate (%) | Gas volume change rate (%) | Resistance increase rate (%) |
| Comparative Example 2 | NEP | | 100 | | 900000 | 2 | 1 | | 0 | 150 | | | |
| Example 19 | | TFE | 95 | 5 | 1050000 | 5 | 4 | 0.17 | 2 | 54 | 88 | 0.19 | 121 |
| Example 20 | | | 90 | 10 | 1200000 | 5 | 5 | 0.19 | 2 | 50 | 90 | 0.17 | 115 |
| Example 21 | | | 80 | 20 | 980000 | 5 | 5 | 0.18 | 2 | 47 | 92 | 0.15 | 113 |
| Example 22 | | | 70 | 30 | 1180000 | 5 | 4 | 0.18 | 2 | 49 | 90 | 0.17 | 114 |
| Example 23 | | CTFE | 95 | 5 | 800000 | 4 | 2 | 0.22 | 2 | 55 | 88 | 0.17 | 114 |
| Example 24 | | | 90 | 10 | 840000 | 5 | 3 | 0.23 | 2 | 53 | 87 | 0.17 | 119 |
| Example 25 | | 2.3.3.3-Tetrafluoropropene | 95 | 5 | 650000 | 5 | 3 | 0.18 | 2 | 49 | 88 | 0.18 | 120 |
| Example 28 | | | 90 | 10 | 700000 | 5 | 3 | 0.19 | 2 | 47 | 85 | 0.19 | 121 |
| Example 27 | | | 80 | 20 | 450000 | 5 | 5 | 0.20 | 2 | 44 | 88 | 0.15 | 118 |
| Example 28 | | | 70 | 30 | 600000 | 5 | 5 | 0.18 | 2 | 48 | 87 | 0.20 | 118 |
| Example 29 | | Acrylic acid | 99.9 | 0.1 | 1250000 | 4 | 2 | 0.22 | 0 | 56 | 86 | 0.23 | 132 |
| Example 30 | | | 99.5 | 0.5 | 1200000 | 4 | 3 | 0.24 | 1 | 58 | 87 | 0.25 | 138 |
| Example 31 | | | 99 | 1 | 1100000 | 5 | 3 | 0.24 | 1 | 61 | 86 | 0.27 | 136 |
| Example 32 | | HFP | 95 | 5 | 700000 | 4 | 3 | 0.21 | 1 | 60 | 80 | 0.28 | 143 |
| Example 33 | | | 90 | 10 | 900000 | 5 | 3 | 0.21 | 1 | 59 | 79 | 0.27 | 147 |
| Example 34 | | | 80 | 20 | 550000 | 5 | 4 | 0.23 | 2 | 57 | 78 | 029 | 146 |
| Example 35 | | PMVE | 95 | 5 | 1050000 | 4 | 2 | 0.17 | 1 | 49 | 84 | 0.20 | 133 |

Table 3

| | Solvent | Type of other monomer ($\alpha$) | Formulation (mol%) | | Weight average molecular weight | Solubility | Characteristics | | | | Battery characteristics | | |
|---|---|---|---|---|---|---|---|---|---|---|---|---|---|
| | | | VdF | $\alpha$ | | | Slurry stabiity | Adhesion (N/cm) | Flexbilty | Surface resistance ($\Omega\cdot$cm) | High temperature storage capacity retention rate (%) | Gas volume change rate (%) | Resistance increase rate (%) |
| Comparative Example 3 | NBP | | 100 | | 900000 | 1 | 2 | 0.20 | 0 | 82 | 69 | 0.38 | 170 |
| Example 36 | | TFE | 95 | 5 | 1050000 | 4 | 4 | 016 | 2 | 56 | 96 | 0.21 | 111 |
| Example 37 | | | 90 | 10 | 1200000 | 5 | 5 | 0.19 | 2 | 52 | 97 | 0.18 | 107 |
| Example 38 | | | 80 | 20 | 980000 | 5 | 5 | 0.19 | 2 | 49 | 98 | 0.16 | 102 |
| Example 39 | | | 70 | 30 | 1180000 | 5 | 5 | 0.18 | 2 | 51 | 97 | 0.18 | 104 |
| Example 40 | | CTFE | 95 | 5 | 800000 | 4 | 2 | 0.24 | 2 | 57 | 96 | 0.18 | 106 |
| Example 41 | | | 90 | 10 | 840000 | 5 | 2 | 0.22 | 2 | 56 | 95 | 0.18 | 108 |
| Example 42 | | 2.3.3.3-Tetrafluoropropene | 95 | 5 | 650000 | 5 | 3 | 0.18 | 2 | 51 | 96 | 0.19 | 110 |
| Example 43 | | | 90 | 10 | 700000 | 5 | 3 | 0.21 | 2 | 47 | 95 | 0.21 | 113 |
| Example 44 | | | 80 | 20 | 450000 | 5 | 4 | 0.20 | 2 | 44 | 97 | 0.18 | 109 |
| Example 45 | | | 70 | 30 | 600000 | 5 | 3 | 0.21 | 2 | 50 | 95 | 0.21 | 110 |
| Example 46 | | Acrylic acid | 99.9 | 0.1 | 1250000 | 4 | 2 | 0.23 | 0 | 59 | 95 | 0.26 | 124 |
| Example 47 | | | 99.5 | 0.5 | 1200000 | 4 | 2 | 0.24 | 1 | 61 | 94 | 0.28 | 127 |
| Example 48 | | | 99 | 1 | 1100000 | 5 | 2 | 0.26 | 1 | 64 | 94 | 0.28 | 128 |
| Example 49 | | HFP | 95 | 5 | 700000 | 4 | 3 | 0.22 | 1 | 63 | 89 | 0.29 | 138 |
| Example 50 | | | 90 | 10 | 900000 | 4 | 4 | 0.21 | 1 | 61 | 88 | 0.30 | 141 |
| Example 51 | | | 80 | 20 | 550000 | 5 | 5 | 0.20 | 2 | 60 | 87 | 0.32 | 149 |
| Example 52 | | PMVE | 95 | 5 | 1050000 | 4 | 2 | 0.17 | 1 | 61 | 85 | 0.20 | 117 |

Table 4

| | Solvent | Type of other monomer ($\alpha$) | Formuation (mol%) | | Weight average molecular weight | Solubility | Characteristics | | | | Battery characteristics | | |
|---|---|---|---|---|---|---|---|---|---|---|---|---|---|
| | | | VdF | $\alpha$ | | | Slurry stabiity | Adhesion (N/cm) | Flexibility | Suface resistance ($\Omega$·cm) | High temperature storage capacity retention rate (%) | Gas volume change rate (%) | Resistance increase rate (%) |
| Comparative Example 4 | NMP | - | 100 | | 900000 | 5 | 2 | 0.15 | 0 | 83 | 55 | 0.40 | 210 |
| Comparative Example 5 | | TFE | 80 | 20 | 980000 | 5 | 2 | 0.12 | 1 | 80 | 60 | 0.37 | 180 |
| Comparative Example 6 | | CTFE | 95 | 5 | 800000 | 5 | 2 | 0.18 | 0 | 82 | 58 | 0.38 | 192 |
| Comparative Example 7 | | 2,3,3,3-Tetrafluoropropene | 80 | 20 | 450000 | 5 | 2 | 0.16 | 1 | 75 | 55 | 0.39 | 205 |
| Comparative Example 8 | | Acrylic acid | 99.5 | 0.5 | 1200000 | 5 | 2 | 0.21 | 0 | 81 | 54 | 0.42 | 218 |
| Comparative Example 9 | | HFP | 95 | 5 | 700000 | 5 | 2 | 0.18 | 0 | 83 | 52 | 0.43 | 224 |
| Comparative Example 10 | | PMVE | 95 | 5 | 1050000 | 5 | 2 | 0.15 | 0 | 84 | 51 | 0.41 | 205 |

## Claims

1. A composition for electrode formation comprising a copolymer comprising vinylidene fluoride unit and a unit of an other monomer other than vinylidene fluoride, and a solvent represented by a general formula (1)

General formula (1):

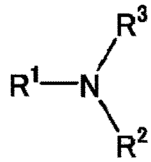

wherein $R^1$, $R^2$, and $R^3$ are each independently H or a monovalent substituent, provided that the total number of carbon atoms of $R^1$, $R^2$, and $R^3$ is 6 or more, and at least one of $R^1$, $R^2$, and $R^3$ is an organic group having carbonyl group; and any two of $R^1$, $R^2$, and $R^3$ optionally bond to each other to form a ring.

2. The composition for electrode formation according to claim 1, wherein the solvent is a solvent represented by a general formula (1a)

General formula (1a):

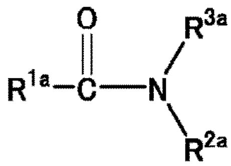

wherein $R^{1a}$ is a monovalent substituent, $R^{2a}$ and $R^{3a}$ are each independently H or a monovalent substituent, provided that the total number of carbon atoms of $R^{1a}$, $R^{2a}$, and $R^{3a}$ is 5 or more; and any two of $R^{1a}$, $R^{2a}$, and $R^{3a}$ optionally bond to each other to form a ring.

3. The composition for electrode formation according to claim 1 or 2, wherein the solvent is at least one selected from the group consisting of a solvent represented by a general formula (1b-1) and a solvent represented by a general formula (1b-2)

General formula (1b-1):

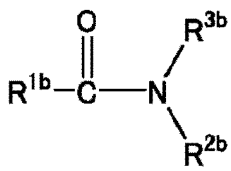

wherein $R^{1b}$ is an alkyl group, an alkoxyalkyl group, an acylalkyl group, an alkenyl group, an amino group, or an aminoalkyl group, $R^{2b}$ and $R^{3b}$ are each independently an alkyl group or an alkoxyalkyl group, and the total number of carbon atoms of $R^{1b}$, $R^{2b}$, and $R^{3b}$ is 5 or more; and $R^{2b}$ and $R^{3b}$ optionally bond with each other to form a ring together with the nitrogen atom to which $R^{2b}$ and $R^{3b}$ are attached, and the ring optionally contains an oxygen atom as a ring-constituting atom.

General formula (1b-2):

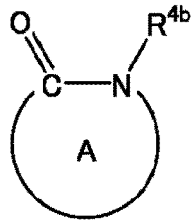

wherein ring A is a 5- or 6-membered amide ring, $R^{4b}$ is an alkyl group, a cycloalkyl group, or an alkenyl group, and the total number of carbon atoms of ring A and $R^{4b}$ is 5 or more.

**4.** The composition for electrode formation according to any one of claims 1 to 3, wherein the solvent is at least one selected from the group consisting of 3-methoxy-N,N-dimethylpropanamide, N-ethyl-2-pyrrolidone, and N-butyl-2-pyrrolidone.

**5.** The composition for electrode formation according to any one of claims 1 to 4, wherein the other monomer is at least one selected from the group consisting of tetrafluoroethylene, chlorotrifluoroethylene, (meth)acrylic acid, 2,3,3,3-tetrafluoropropene, hexafluoropropylene, and a fluoroalkyl vinyl ether.

**6.** The composition for electrode formation according to any one of claims 1 to 5, wherein a content of the other monomer unit in the copolymer is 0.0001 to 50.0 mol% based on all monomer units.

**7.** The composition for electrode formation according to any one of claims 1 to 6, further comprising a powder electrode material.

**8.** The composition for electrode formation according to claim 7, wherein the powder electrode material comprises a lithium transition metal composite oxide.

**9.** The composition for electrode formation according to any one of claims 1 to 8, wherein the composition for electrode formation is a composition for positive electrode formation.

**10.** An electrode comprising a current collector and an electrode material layer provided on one side or each of both sides of the current collector and formed from the composition for electrode formation according to any one of claims 1 to 9.

**11.** A secondary battery comprising the electrode according to claim 10.

# INTERNATIONAL SEARCH REPORT

International application No.
**PCT/JP2022/025926**

**A. CLASSIFICATION OF SUBJECT MATTER**

***H01M 4/62***(2006.01)i; ***H01G 11/06***(2013.01)i; ***H01G 11/38***(2013.01)i; ***H01M 4/131***(2010.01)i; ***H01M 4/1391***(2010.01)i
FI: H01M4/62 Z; H01M4/1391; H01M4/131; H01G11/06; H01G11/38

According to International Patent Classification (IPC) or to both national classification and IPC

**B. FIELDS SEARCHED**

Minimum documentation searched (classification system followed by classification symbols)

H01M4/62; H01G11/06; H01G11/38; H01M4/131; H01M4/1391

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2021/002369 A1 (DAIKIN IND LTD) 07 January 2021 (2021-01-07) example 1, paragraph [0095], table 1 | 1-11 |
| X | JP 2011-228073 A (HITACHI MAXELL ENERGY LTD) 10 November 2011 (2011-11-10) example 1 | 1-3, 5-11 |
| X | WO 2010/092977 A1 (DAIKIN IND LTD) 19 August 2010 (2010-08-19) example 1, table 1 | 1-3, 5-11 |
| X | JP 2003-077549 A (MATSUSHITA ELECTRIC IND CO LTD) 14 March 2003 (2003-03-14) example 1 | 1-3, 5-11 |
| X | JP 2003-151558 A (MATSUSHITA ELECTRIC IND CO LTD) 23 May 2003 (2003-05-23) example 3 | 1-3, 5-11 |
| X | JP 2002-203524 A (MATSUSHITA ELECTRIC IND CO LTD) 19 July 2002 (2002-07-19) example 1 | 1-3, 5-11 |
| X | JP 2019-200894 A (KUREHA CORP) 21 November 2019 (2019-11-21) example 1 | 1-3, 5-11 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **07 September 2022** | **20 September 2022** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**

International application No.
**PCT/JP2022/025926**

**C. DOCUMENTS CONSIDERED TO BE RELEVANT**

| Category* | Citation of document, with indication, where appropriate, of the relevant passages | Relevant to claim No. |
|---|---|---|
| X | JP 2016-219275 A (HITACHI MAXELL) 22 December 2016 (2016-12-22) examples 1, 19 | 1-3, 5, 7-11 |
| X | JP 2021-082549 A (SHOWA DENKO MAT CO LTD) 27 May 2021 (2021-05-27) example 1 | 1-3, 5, 7-11 |
| X | JP 2020-202158 A (HITACHI LTD) 17 December 2020 (2020-12-17) example 1 | 1-3, 5, 7-11 |
| X | JP 2001-210372 A (MATSUSHITA ELECTRIC IND CO LTD) 03 August 2001 (2001-08-03) paragraph [0009] | 1-3, 5, 7-11 |
| X | JP 2001-297737 A (MATSUSHITA ELECTRIC IND CO LTD) 26 October 2001 (2001-10-26) example 1 | 1-3, 5, 7-11 |
| X | JP 2001-297748 A (MATSUSHITA ELECTRIC IND CO LTD) 26 October 2001 (2001-10-26) example 1 | 1-3, 5, 7-11 |
| X | WO 2013/047747 A1 (HITACHI MAXELL) 04 April 2013 (2013-04-04) example 1 | 1-3, 5, 7-11 |
| X | WO 2012/014998 A1 (HITACHI MAXELL ENERGY LTD) 02 February 2012 (2012-02-02) example 1-1 | 1-3, 5, 7-11 |

Form PCT/ISA/210 (second sheet) (January 2015)

**INTERNATIONAL SEARCH REPORT**
**Information on patent family members**

International application No.
**PCT/JP2022/025926**

| Patent document cited in search report | Publication date (day/month/year) | Patent family member(s) | Publication date (day/month/year) |
|---|---|---|---|
| WO 2021/002369 A1 | 07 January 2021 | EP 3996167 A1<br>example 1, paragraph [0114], table 1<br>CN 114008825 A<br>TW 202109952 A | |
| JP 2011-228073 A | 10 November 2011 | US 2011/0256437 A1<br>example 1<br>CN 102222788 A<br>KR 10-2011-0116972 A | |
| WO 2010/092977 A1 | 19 August 2010 | CN 102318108 A<br>KR 10-2011-0111481 A | |
| JP 2003-077549 A | 14 March 2003 | US 2003/0049519 A1<br>example 1<br>CN 1399366 A | |
| JP 2003-151558 A | 23 May 2003 | (Family: none) | |
| JP 2002-203524 A | 19 July 2002 | US 2003/0134190 A1<br>example 1<br>WO 2002/054525 A1 | |
| JP 2019-200894 A | 21 November 2019 | WO 2019/220676 A1<br>example 1<br>CN 112005406 A<br>KR 10-2021-0002633 A | |
| JP 2016-219275 A | 22 December 2016 | (Family: none) | |
| JP 2021-082549 A | 27 May 2021 | (Family: none) | |
| JP 2020-202158 A | 17 December 2020 | (Family: none) | |
| JP 2001-210372 A | 03 August 2001 | (Family: none) | |
| JP 2001-297737 A | 26 October 2001 | (Family: none) | |
| JP 2001-297748 A | 26 October 2001 | (Family: none) | |
| WO 2013/047747 A1 | 04 April 2013 | US 2014/0234704 A1<br>example 1<br>KR 10-2014-0072872 A<br>CN 103959547 A | |
| WO 2012/014998 A1 | 02 February 2012 | CN 103038928 A<br>KR 10-2013-0033425 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2010525124 W
- JP 2011184479 A
- JP 2021508145 W